(19) Europäisches Patentamt
European Patent Office
Office européen des brevets

(11) **EP 3 987 708 B1**

(12) **EUROPEAN PATENT SPECIFICATION**

(45) Date of publication and mention
of the grant of the patent:
**02.08.2023 Bulletin 2023/31**

(21) Application number: **20743803.7**

(22) Date of filing: **22.06.2020**

(51) International Patent Classification (IPC):
**H04L 5/00** (2006.01)

(52) Cooperative Patent Classification (CPC):
**H04L 5/005; H04L 5/0053**

(86) International application number:
**PCT/IB2020/055877**

(87) International publication number:
**WO 2020/261095 (30.12.2020 Gazette 2020/53)**

(54) **SYSTEMS AND METHODS FOR NR UE USE OF LTE REFERENCE SIGNALS**

SYSTEME UND VERFAHREN ZUR NR-BENUTZERGERÄTEVERWENDUNG VON LTE-REFERENZSIGNALEN

SYSTÈMES ET PROCÉDÉS POUR L'UTILISATION D'UN UE NR DE SIGNAUX DE RÉFÉRENCE LTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2019 US 201962865492 P**

(43) Date of publication of application:
**27.04.2022 Bulletin 2022/17**

(73) Proprietor: **Telefonaktiebolaget LM Ericsson (publ)**
**164 83 Stockholm (SE)**

(72) Inventors:
• **MURUGANATHAN, Siva**
**Stittsville, Ontario K2S 0R3 (CA)**
• **FRENNE, Mattias**
**754 43 Uppsala (SE)**
• **GAO, Shiwei**
**Nepean, Ontario K2J 0H5 (CA)**

(74) Representative: **Ericsson**
**Patent Development**
**Torshamnsgatan 21-23**
**164 80 Stockholm (SE)**

(56) References cited:
• **AT&T: "Further details of PDSCH time-domain resource allocation before RRC connection setup", 3GPP DRAFT; R1-1804650, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 15 April 2018 (2018-04-15), XP051426918, Retrieved from the Internet: URL:http://www.3gpp.org/ftp/Meetings%5F3GP P%5FSYNC/RAN1/Docs/ [retrieved on 2018-04-15]**
• **MEDIATEK INC: "Coexistence of NB-IoT with NR", 3GPP DRAFT; R1-1904159-MEDIATEK-NB-IOT COEXISTENCE WITH NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Xi'an, China; 20190408 - 20190412 7 April 2019 (2019-04-07), XP051699494, Retrieved from the Internet: URL:http://www.3gpp.org/ftp/Meetings%5F3GP P%5FSYNC/RAN1/Docs/R1%2D1904159%2Ezip [retrieved on 2019-04-07]**

- **NOKIA ET AL: "Summary on CRs related to rate-matching in NR", 3GPP DRAFT; R1-1907702_SUMMARY_CRS_7_1_3_RAN1_97_ RATE_ MATCHING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, Nevada, USA; 20190513 - 20190517 16 May 2019 (2019-05-16), XP051739987, Retrieved from the Internet: URL:http://www.3gpp.org/ftp/tsg%5Fran/WG1% 5FRL1/TSGR1%5F97/Docs/R1%2D1907702%2Ez ip [retrieved on 2019-05-16]**

## Description

Related Applications

This application claims the benefit of provisional patent application serial number 62/865,492, filed June 24, 2019.

Technical Field

The present disclosure relates to the efficient use of reference signals.

Background

Note that terminology such as eNodeB (eNB)/gNodeB (gNB) and User Equipment (UE) should be considered non-limiting and in particular does not imply a certain hierarchical relation between the two; in general, "eNB" or "gNB" could be considered as device 1 and "UE" device 2, and these two devices communicate with each other over some radio channel. While the current disclosure focuses on wireless transmissions in the downlink, the embodiments disclosed herein are equally applicable in the uplink.

The next generation mobile wireless communication system (Fifth Generation (5G)) or new New Radio (NR) will support a diverse set of use cases and a diverse set of deployment scenarios. The latter includes deployment at both low frequencies (100s of MHz), similar to Long Term Evolution (LTE), and very high frequencies (mm waves in the tens of GHz).

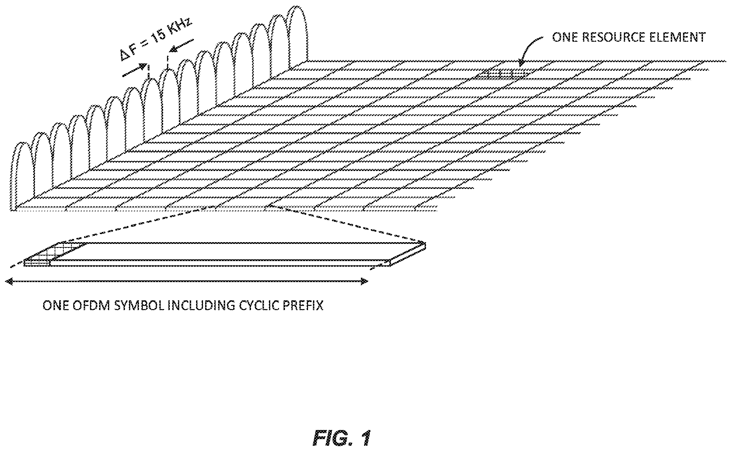

LTE physical resource and time-domain structure: LTE uses Orthogonal Frequency Division Multiplexing (OFDM) in the downlink and Discrete Fourier Transform (DFT)-spread OFDM in the uplink. The basic LTE downlink physical resource can thus be seen as a time-frequency grid as illustrated in Figure 1, where each resource element corresponds to one OFDM subcarrier during one OFDM symbol interval.

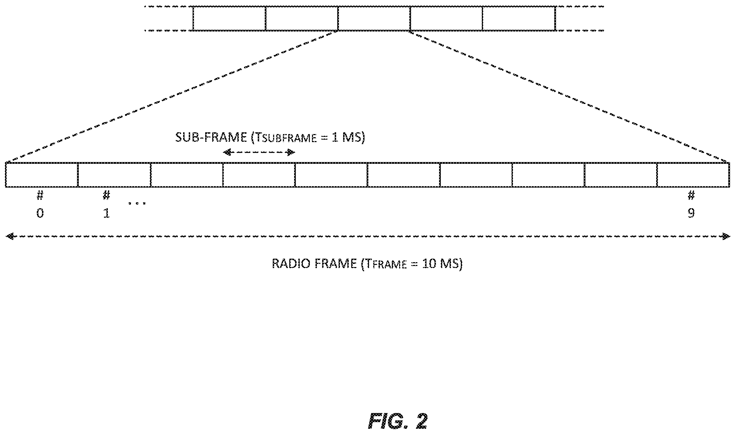

In the time domain, LTE downlink transmissions are organized into radio frames of 10 ms, each radio frame consisting of ten equally-sized subframes of length $T_{subframe}$ = 1 $ms$ as shown in Figure 2, where Figure 2 is a block diagram of an LTE time-domain structure with 15 kHz subcarrier spacing. Each subframe is further divided into two slots each with 7 OFDM symbols in a normal cyclic prefix configuration.

Furthermore, the resource allocation in LTE is typically described in terms of Resource Blocks (RBs), where a RB corresponds to one slot (0.5 ms) in the time domain and twelve contiguous subcarriers in the frequency domain. Resource blocks are numbered in the frequency domain, starting with zero from one end of the system bandwidth.

NR physical resource and time-domain structure: Similar to LTE, NR uses OFDM in the downlink. In the uplink, both Discrete Fourier Transform (DFT)-spread OFDM and OFDM are supported by NR. One difference from LTE is that different subcarrier spacing values are supported in NR. The supported subcarrier spacing values (also referred to as different numerologies) are given by $\Delta f$ = $(15 \times 2^{\alpha})$ $kHz$ where $\alpha$ is a non-negative integer and $\Delta f$ = $15 kHz$ is the basic subcarrier spacing that is also used in LTE. In the time domain, NR downlink and uplink physical resources are organized into equally-sized subframes of 1ms each. A subframe is further divided into multiple slots of equal slot duration. The slot durations corresponding to different subcarrier spacings are also shown in Table 1.

Table 1: Slot length at different numerologies for NR.

| Numerology | Slot length | RB BW |
|---|---|---|
| 15 kHz | 1 ms | 180 kHz |
| 30 kHz | 0.5 ms | 360 kHz |
| 60 kHz | 0.25 ms | 720 kHz |
| 120 kHz | 125 $\mu$s | 1.44 MHz |
| 240 kHz | 62.5 $\mu$s | 2.88 MHz |

The basic NR physical resource can thus be considered as a time-frequency grid similar to the one in LTE as illustrated in Figure 1 (LTE physical resources), where each resource element corresponds to one OFDM subcarrier during one OFDM symbol interval. Although a subcarrier spacing of $\Delta f$ = 15 $kHz$ is shown in Figure 1, different subcarrier spacing values are supported in NR. The supported subcarrier spacing values (also referred to as different numerologies) in NR are given by $\Delta f$ = $(15 \times 2^{\alpha})$ $kHz$ where $\alpha$ is a non-negative integer.

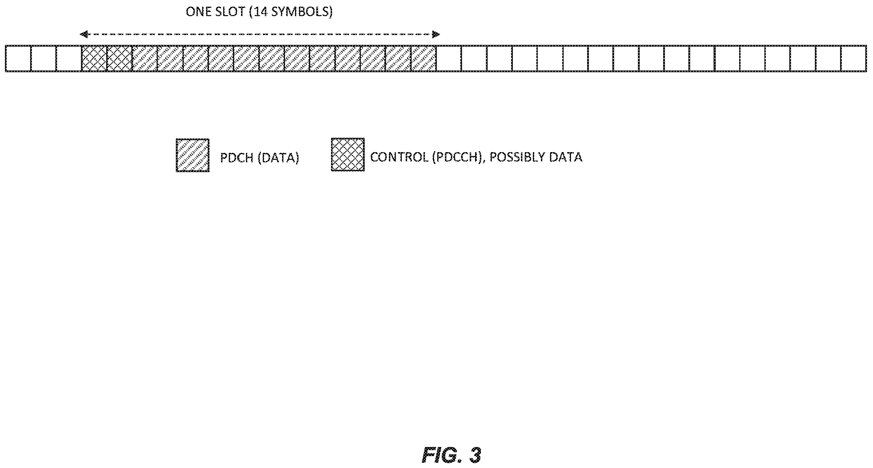

Typical data scheduling in NR is on a per slot basis, an example is shown in Figure 3 where the first two symbols may contain a Physical Downlink Control Channel (PDCCH) and the remaining 12 symbols contain Physical Data Channel (PDCH), either a Physical Downlink Shared Channel (PDSCH) or Physical Uplink Shared Channel (PUSCH).

In the frequency domain, a system bandwidth is divided into resource blocks (RBs), each corresponding to 12 contiguous subcarriers. The common RBs (CRBs) are numbered starting with 0 from one end of the system bandwidth. The UE is configured with between one and four bandwidth parts (BWPs) which may be a subset of the RBs supported on a carrier. Hence, a BWP may start at a CRB larger than zero. All configured BWPs have a common reference, the CRB 0. Hence, a UE can be configured as either a narrow BWP (e.g., 10 MHz) or a wide BWP (e.g., 100 MHz), but only one BWP can be active for the UE at a given point in time. The Physical RBs (PRB) are numbered from 0 to N-1 within a BWP (but the 0th PRB may thus be the Kth CRB where K>0).

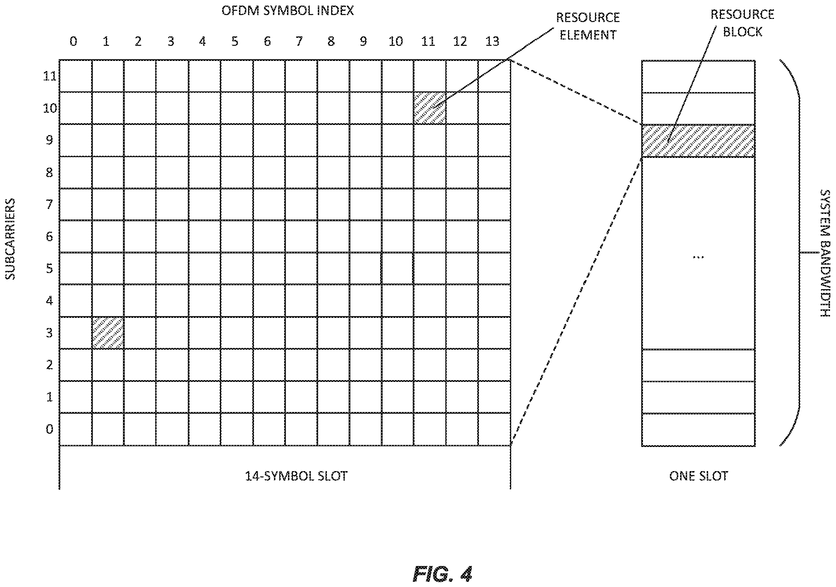

The basic NR physical time-frequency resource grid is illustrated in Figure 4, where only one RB within a 14-symbol slot is shown. One OFDM subcarrier during one OFDM symbol interval forms one Resource Element (RE).

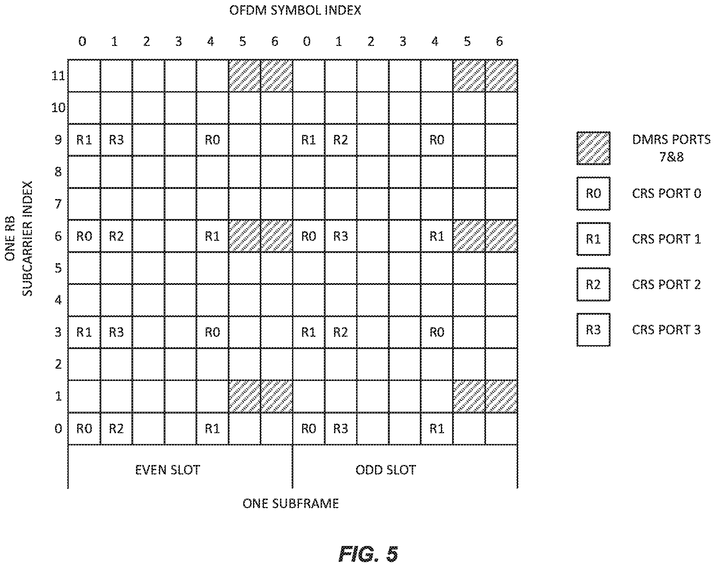

One type of downlink Reference Signal (RS) in LTE is a Cell-specific Reference Signal (CRS). CRSs are transmitted in every subframe and over the entire frequency band. Up to four CRS ports are supported in LTE. CRSs are transmitted on a grid of REs in each PRB and can be used for downlink channel estimation purpose by an LTE UE. An example of the CRS RE locations in a PRB is shown in Figure 5. The frequency locations of the CRS REs are cell dependent and may be shifted for cells with different physical cell IDs. For channel estimation, the channels on the CRS REs are first estimated. The channels on the data REs are then estimated by interpolation or filtering the channels estimated on the CRS REs. Since CRSs are cell specific they are transmitted to all UEs in a cell.

In LTE, the CRS sequence is defined by (see clause 6.10.1.1 of 3GPP TS 38.211 V15.5.0):

$$r_{l,n_s}(m) = \frac{1}{\sqrt{2}}\big(1 - 2 \cdot c(2m)\big) + j\frac{1}{\sqrt{2}}\big(1 - 2 \cdot c(2m+1)\big), \quad m = 0,1,\dots,2N_{RB}^{\max,DL} - 1$$

where l is the OFDM symbol number within a slot, $n_s$ is the slot number within a radio frame, and $N_{RB}^{\max,\,DL}$ is the largest downlink bandwidth configuration expressed in terms of RBs. The pseudo-random sequence $c(i)$ is defined as per clause 7.2 of 3GPP TS 38.211 V15.5.0. The sequence generator $c(i)$ is initialized according to:

$$c_{\text{init}} = 2^{10} \cdot \big(7 \cdot (n_s' + 1) + l + 1\big) \cdot \big(2 \cdot N_{ID}^{cell} + 1\big) + 2 \cdot N_{ID}^{cell} + N_{CP}$$

where $N_{ID}^{cell}$ is the physical layer cell identity associated with the LTE cell and $N_{CP}$ is a binary index representing the Cyclic Prefix (CP) length. An LTE UE acquires $N_{ID}^{cell}$ from reading the Primary Synchronization Signal (PSS)/Secondary Synchronization Signal (SSS) transmitted by the LTE cell; specifically, $N_{CP}$ = 1 for normal CP and $N_{CP}$ = 0 for extended CP and $n'_s = n_s$ for LTE frame structure types 1 and 2.

In LTE Release-10, a new Channel State Information Reference Signal (CSI-RS) was introduced for the intent to estimate channel state information. The CSI-RS based CSI feedback provides several advantages over the CRS based CSI feedback used in previous releases. Firstly, the CSI-RS is not used for demodulation of the data signal, and thus does not require the same density (i.e., the overhead of the CSI-RS is substantially less compared to that of CRS). Secondly, CSI-RS provides a much more flexible means to configure CSI feedback measurements (e.g., which CSI-RS resource to measure on can be configured in a UE specific manner).

Two types of CSI-RS are defined in LTE: Non-Zero Power (NZP) CSI-RS and Zero Power (ZP) CSI-RS. NZP CSI-RS is transmitted by a network node (or eNB) for UEs to estimate the downlink channels to the network node. While using a ZP CSI-RS, one or more CSI-RS resource(s) is/are allocated by the network node, but nothing is transmitted on the resources, which can be used to reduce interferences to neighbor cells so that better channel estimation can be performed by the UEs in the neighbor cells.

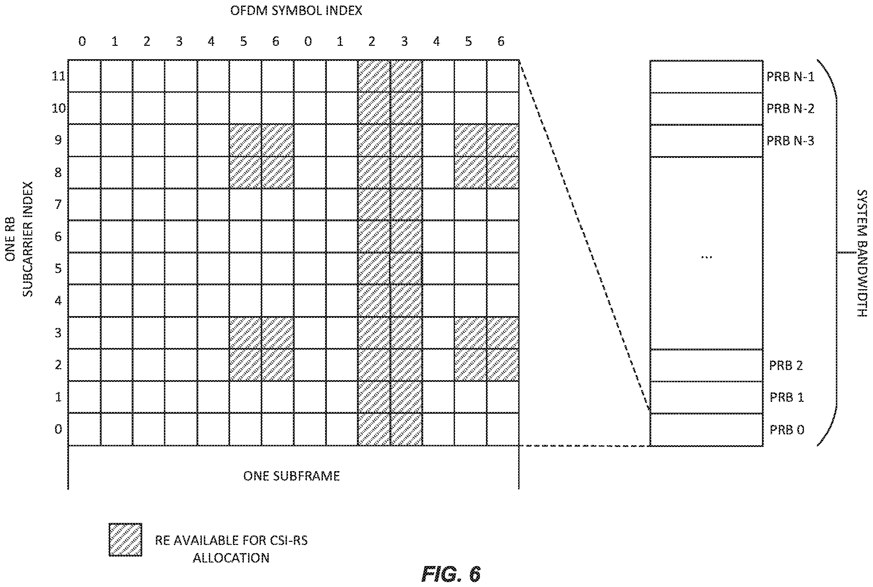

For a Rel-13 LTE UE, the numbers of supported antenna ports are 1, 2, 4, 8, 12, and 16. In LTE Rel-14, the antenna port numbers have been increased to include 20, 24, 28, and 32 ports. Figure 6 shows the REs available for CSI-RS allocations in a PRB. Up to 40 REs can be configured for a CSI-RS and the CSI-RS is transmitted over all PRBs of a system bandwidth. In Rel-14 LTE, a reduced density CSI-RS is supported; that is the CSI-RS signals corresponding to different ports are transmitted in every $N^{th}$ PRB.

In LTE, CSI-RS can be transmitted periodically on certain subframes, also referred to as CSI-RS subframes.

An LTE CSI-RS subframe configuration consists of a subframe periodicity and a subframe offset. The periodicity is configurable to one of 5, 10, 20, 40, or 80ms. An LTE CSI-RS configuration consists of a CSI-RS resource configuration as specified in Table 6.10.5.2-1 of 3GPP TS36.211 V15.5.0 and a CSI-RS subframe configuration as specified in Table 6.10.5.3-1 of 3GPP TS36.211 V15.5.0.

In LTE, the CSI-RS sequence is defined by (see clause 6.10.5.1 of 3GPP TS 38.211 V15.5.0):

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,\ldots,N_{\mathrm{RB}}^{\max,\mathrm{DL}} - 1$$

The pseudo-random sequence $c(i)$ is defined as per clause 7.2 of 3GPP TS 38.211 V15.5.0. The sequence generator for $c(i)$ is initialized according to:

$$c_{\mathrm{init}} = 2^{10} \cdot \left(7 \cdot \left(n_s' + 1\right) + l + 1\right) \cdot \left(2 \cdot N_{\mathrm{ID}}^{\mathrm{CSI}} + 1\right) + 2 \cdot N_{\mathrm{ID}}^{\mathrm{CSI}} + N_{\mathrm{CP}}$$

where $N_{\mathrm{ID}}^{\mathrm{CSI}}$ equals a virtual cell ID which can be configured to an LTE UE. The virtual cell ID is given by the parameter *scramblingidentity* given in the *CSI-RS-ConfigNZP* information element (see 3GPP TS 36.331 V15.1.0). If the virtual cell is not configured, then $N_{\mathrm{ID}}^{\mathrm{CSI}}$ equals $N_{\mathrm{ID}}^{\mathrm{cell}}$.

Channel State Information Reference Signal (CSI-RS) in NR: Similar to LTE, in NR, a unique reference signal is transmitted from each antenna port at the gNB for downlink channel estimation at a terminal. Reference signals for downlink channel estimation are commonly referred to as CSI-RSs. For N antenna ports, there will be N CSI-RS signals, each associated with one antenna port. Up to 32 (i.e., $N_{tx}$ = 32) antenna ports (i.e., 1, 2, 4, 8, 12, 16, 24, 32 ports) are supported in NR and thus up to 32 CSI-RS signals can be configured for a terminal. Note that the CSI-RS RE patterns in NR are different from the CSI-RS RE patterns in LTE.

By measuring on the CSI-RS, a terminal can estimate the effective channel the CSI-RS is traversing including the radio propagation channel and antenna gains at both the gNB and the terminal. Mathematically, this implies that if a known CSI-RS signal $x_i$ (i = 1,2, ...,$N_{tx}$) is transmitted on the $i$th transmit antenna port at gNB, the received signal $x_i$ (i = 1,2, ..., $N_{tx}$) on the $j$th receive antenna port of a terminal can be expressed as:

$$y_i = h_{i,j} x_i + n_j$$

where $h_{i,j}$ is the effective channel between the $i$th transmit antenna port and the $j$th receive antenna port, $n_j$ is the receiver noise associated with the $j$th receive antenna port, $N_{tx}$ is the number of transmit antenna ports at the gNB and $N_{rx}$ is the number of receive antenna ports at the terminal.

A terminal can estimate the $N_{rx} \times N_{tx}$ effective channel matrix $H$ ($H(i,j) = h_{i,j}$) and thus the channel rank, precoding matrix, and channel quality. This is achieved by using a predesigned codebook for each rank, with each codeword in the codebook being a precoding matrix candidate. A terminal searches through the codebook to find a rank, a codeword associated with the rank, and channel quality associated with the rank and precoding matrix to best match the effective channel. The rank, the precoding matrix and the channel quality are reported in the form of a Rank Indicator (RI), a Precoding Matrix Indicator (PMI) and a Channel Quality Indicator (CQI) as part of CSI feedback. This results in so-called channel dependent precoding, or closed-loop precoding. Such precoding essentially strives to focus the transmit energy into a subspace which is strong in the sense of conveying much of the transmitted energy to the terminal.

A CSI-RS signal is transmitted on a set of time-frequency REs associated with an antenna port. For channel estimation over a system bandwidth, the CSI-RS is typically transmitted over the whole system bandwidth. The set of REs used for CSI-RS transmission is referred to as CSI-RS resource. From a UE point of view, an antenna port is equivalent to a CSI-RS that the terminal shall use to measure the channel. Improved systems and methods for use of reference signals are needed.

Document "Further details of PDSCH time-domain resource allocation before RRC connection setup", AT&T, 3GPP draft R1-1804650 may be construed to disclose an evaluation of PDSCH time-domain resource allocation before RRC connection setup. It was agreed to further use, with two exceptions, tables 5.1.2.1-x introduced in "Draft time domain resource allocation proposal", Nokia et.al., 3GPP draft R1-1803504.

Summary

Systems and methods for New Radio (NR) User Equipment (UE) use of Long Term Evolution (LTE) reference signals are provided.

According to the disclosure, there are provided methods, a computer-readable medium, an NR wireless device, and a base station according to the independent claims. Further developments are set forth in the dependent claims.

In this way, the need to configure additional NR reference signals can be reduced. As a result, the reference signal overhead for an NR UE in a DSS deployment can be reduced, for example.

In some embodiments, the at least one LTE reference signal is an LTE Cell-specific Reference Signal (CRS) and using the at least one LTE reference signal comprises: using the LTE CRS for Channel State Information (CSI) feedback when LTE CRS is configured with 1, 2, or 4 ports for CSI feedback. In some embodiments, using the at least one LTE reference signal comprises: only using the at least one LTE reference signal within the active NR bandwidth part for CSI measurement.

In some embodiments, receiving the configuration for the at least one LTE reference signal comprises: receiving higher layer signaling of the LTE physical cell ID. In some embodiments, the method also includes using the LTE physical cell ID to generate the LTE CRS sequence.

In some embodiments, the at least one LTE reference signal is configured as a reference signal in a Transmission Configuration Indicator (TCI) state for the NR wireless device. In some embodiments, receiving the configuration comprises: receiving the configuration for at least one LTE reference signal through RRC signaling.

In some embodiments, the NR wireless device is operating in a Dynamic Spectrum Sharing (DSS) system with co-existence of NR and LTE. In some embodiments, LTE and NR are deployed with frequency-overlapping carriers in the DSS system.

In some embodiments, the at least one LTE reference signal is an LTE CRS and using the at least one LTE reference signal comprises: using the LTE CRS for CSI feedback when LTE CRS is configured with 1, 2, or 4 ports for CSI feedback.

In some embodiments, using the at least one LTE reference signal comprises: only using the at least one LTE reference signal within the active NR bandwidth part for CSI measurement. In some embodiments, providing the configuration for the at least one LTE reference signal comprises: providing higher layer signaling of the LTE physical cell ID.

In some embodiments, the at least one LTE reference signal is configured as a reference signal in a TCI state for the NR wireless device. In some embodiments, the base station is an NR base station.

In some embodiments, the base station is operating in a DSS system with co-existence of NR and LTE. In some embodiments, LTE and NR are deployed with frequency-overlapping carriers in the DSS system.

In some embodiments, a NR wireless device for increasing throughput includes one or more processors and memory. The memory stores instructions executable by the one or more processors, whereby the NR wireless device is operable to perform any of the embodiments discussed above.

In some embodiments, a base station for increasing throughput includes one or more processors and memory. The memory stores instructions executable by the one or more processors, whereby the base station is operable to perform any of the embodiments discussed above.

Embodiments disclosed herein allow configuring an NR UE with LTE reference signals (such as LTE CRS) which can be used for certain measurements to assist NR operations in a DSS deployment. In addition to rate matching PDSCH around the LTE reference signals, the NR UE can use the LTE reference signals for one or more of the following purposes:

- for CSI measurement and feedback;
- for time and frequency synchronization/tracking; and
- for configuring the LTE reference signal as a QCL source in a TCI state for the NR UE.

Using the LTE reference signals for the above purposes reduces the need to configure additional NR reference signals for the said purposes. As a result, the RS overhead for an NR UE in a DSS deployment can be reduced.

In some embodiments, the LTE reference signal is an LTE CRS and using the LTE reference signal comprises using the LTE CRS for CSI feedback when LTE CRS is configured with 1, 2, or 4 ports CSI feedback. In some embodiments, using the LTE reference signal comprises only using the LTE reference signal within the active NR bandwidth part for CSI measurement.

In some embodiments, receiving the configuration for the LTE reference signal comprises receiving higher layer signaling of the LTE physical cell ID. In some embodiments, the method also includes using the LTE physical cell ID to generate the LTE CRS sequence.

In some embodiments, the LTE reference signal is configured as a reference signal in a Transmission Configuration Indicator, TCI, state for the NR wireless device. In some embodiments, the wireless device is operating in a DSS system with co-existence of NR and LTE.

Certain embodiments may provide one or more of the following technical advantage(s). With some embodiments of the current disclosure, the number of REs available for NR PDSCH in a RB can be increased by using the LTE reference signals for CSI feedback for NR, especially in a DSS deployment. In addition, the NR UE can use LTE CRS for fine time and frequency synchronization, in addition to a configured Tracking Reference Signal (TRS), or even without a configured TRS.

Brief Description of the Drawings

The accompanying drawing figures incorporated in and forming a part of this specification illustrate several aspects of the disclosure, and together with the description serve to explain the principles of the disclosure.

Figure 1 illustrates how basic New Radio (NR) physical resources can be considered as a time-frequency grid similar to the one in Long Term Evolution (LTE);
Figure 2 illustrates LTE downlink transmissions organized into radio frames of 10 ms, each radio frame consisting of ten equally-sized subframes;
Figure 3 illustrates typical data scheduling in NR on a per slot basis where the first two symbols may contain a Physical Downlink Control Channel (PDCCH) and the remaining 12 symbols contain a Physical Data Channel (PDCH), either a Physical Downlink Shared Channel (PDSCH) or Physical Uplink Shared Channel (PUSCH);
Figure 4 illustrates a basic NR physical time-frequency resource grid where only one Resource Block (RB) within a 14-symbol slot is shown;
Figure 5 illustrates an example of the Cell-specific Reference Signals (CRS) RE locations in a Physical RB (PRB);
Figure 6 shows the REs available for Channel State Information Reference Signal (CSI-RS) allocations in a PRB;
Figure 7 illustrates one example of a cellular communications system in which embodiments of the present disclosure may be implemented;
Figure 8 illustrates a wireless communication system represented as a 5G network architecture composed of core Network Functions (NFs), where interaction between any two NFs is represented by a point-to-point reference point/interface;
Figure 9 illustrates a 5G network architecture using service-based interfaces between the NFs in the control plane, instead of the point-to-point reference points/interfaces used in the 5G network architecture of Figure 8;
Figure 10 illustrates a method performed by a NR wireless device for increasing throughput, according to some embodiments of the present disclosure;
Figure 11 illustrates an example where LTE UE1 and NR UEs 2-3 are served in a DSS scenario, according to some embodiments of the present disclosure;
Figure 12 illustrates an example where LTE UE1 and NR UE 2 are served in a DSS scenario, according to some embodiments of the present disclosure;
Figure 13 illustrates one embodiment of a User Equipment (UE) , according to some embodiments of the present disclosure;
Figure 14 is a schematic block diagram illustrating a virtualization environment in which functions implemented by some embodiments may be virtualized, according to some embodiments of the present disclosure;
Figure 15 illustrates an exemplary communication system, according to some embodiments of the present disclosure;
Figure 16 illustrates example implementations, in accordance with an embodiment, of the UE, base station, and host computer of Figure 15, according to some embodiments of the present disclosure;
Figures 17 through 20 are flow charts illustrating methods implemented in a communication system, according to some embodiments of the present disclosure; and
Figures 21 through 23 depict flowcharts illustrating some methods implemented in a communication system, according to some embodiments of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. The scope of protection of this invention is defined by the appended claims.

**Radio Node:** As used herein, a "radio node" is either a radio access node or a wireless device.

**Radio Access Node:** As used herein, a "radio access node" or "radio network node" is any node in a radio access network of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), and a relay node.

**Core Network Node:** As used herein, a "core network node" is any type of node in a core network or any node that implements a core network function. Some examples of a core network node include, e.g., a Mobility Management Entity (MME), a Packet Data Network Gateway (PGW), a Service Capability Exposure Function (SCEF), a Home Subscriber Server (HSS), or the like. Some other examples of a core network node include a node implementing a Access and Mobility Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Wireless Device:** As used herein, a "wireless device" is any type of device that has access to (i.e., is served by) a cellular communications network by wirelessly transmitting and/or receiving signals to a radio access node(s). Some examples of a wireless device include, but are not limited to, a User Equipment device (UE) in a 3GPP network and a Machine Type Communication (MTC) device.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

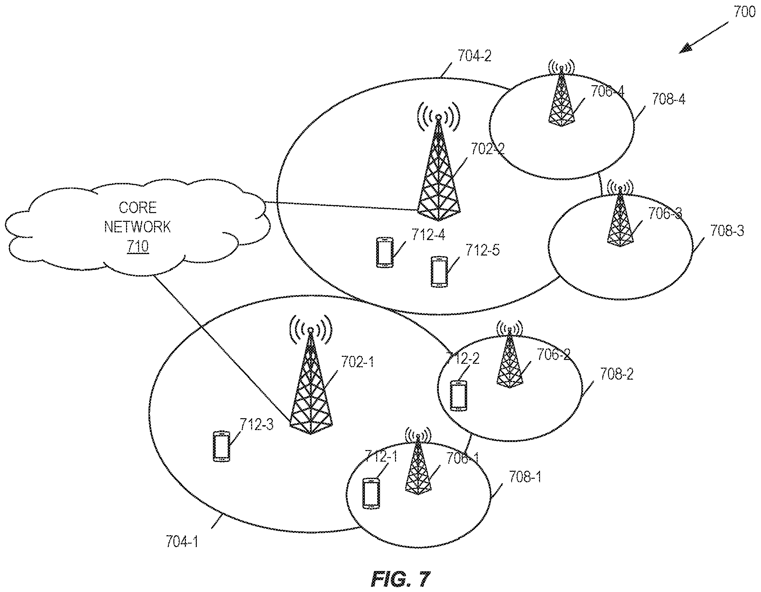

Figure 7 illustrates one example of a cellular communications system 700 in which embodiments of the present disclosure may be implemented. In the embodiments described herein, the cellular communications system 700 is a 5G system (5GS) including a NR Radio Access Network (RAN). In this example, the RAN includes base stations 702-1 and 702-2, which in 5G and/or NR are referred to as gNBs, controlling corresponding (macro) cells 704-1 and 704-2. The base stations 702-1 and 702-2 are generally referred to herein collectively as base stations 702 and individually as base station 702. Likewise, the (macro) cells 704-1 and 704-2 are generally referred to herein collectively as (macro) cells 704 and individually as (macro) cell 704. The RAN may also include a number of low power nodes 706-1 through 706-4 controlling corresponding small cells 708-1 through 708-4. The low power nodes 706-1 through 706-4 can be small base stations (such as pico or femto base stations) or Remote Radio Heads (RRHs), or the like. Notably, while not illustrated, one or more of the small cells 708-1 through 708-4 may alternatively be provided by the base stations 702. The low power nodes 706-1 through 706-4 are generally referred to herein collectively as low power nodes 706 and individually as low power node 706. Likewise, the small cells 708-1 through 708-4 are generally referred to herein collectively as small cells 708 and individually as small cell 708. The cellular communications system 700 also includes a core network 710, which in the 5GS is referred to as the 5G core (5GC). The base stations 702 (and optionally the low power nodes 706) are connected to the core network 710.

The base stations 702 and the low power nodes 706 provide service to wireless devices 712-1 through 712-5 in the corresponding cells 704 and 708. The wireless devices 712-1 through 712-5 are generally referred to herein collectively as wireless devices 712 and individually as wireless device 712. The wireless devices 712 are also sometimes referred to herein as UEs.

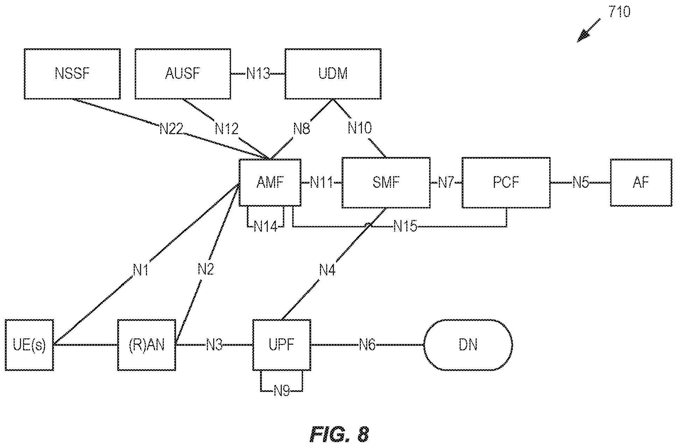

Figure 8 illustrates a wireless communication system represented as a 5G network architecture composed of core Network Functions (NFs), where interaction between any two NFs is represented by a point-to-point reference point/interface. Figure 8 can be viewed as one particular implementation of the system 700 of Figure 7.

Seen from the access side the 5G network architecture shown in Figure 8 comprises a plurality of User Equipment (UEs) connected to either a Radio Access Network (RAN) or an Access Network (AN) as well as an Access and Mobility Management Function (AMF). Typically, the R(AN) comprises base stations, e.g., such as evolved Node Bs (eNBs) or 5G base stations (gNBs) or similar. Seen from the core network side, the 5G core NFs shown in Figure 8 include a Network Slice Selection Function (NSSF), an Authentication Server Function (AUSF), a Unified Data Management (UDM), an AMF, a Session Management Function (SMF), a Policy Control Function (PCF), and an Application Function (AF).

Reference point representations of the 5G network architecture are used to develop detailed call flows in the normative standardization. The N1 reference point is defined to carry signaling between the UE and AMF. The reference points for connecting between the AN and AMF and between the AN and UPF are defined as N2 and N3, respectively. There is a reference point, N11, between the AMF and SMF, which implies that the SMF is at least partly controlled by the AMF. N4 is used by the SMF and UPF so that the UPF can be set using the control signal generated by the SMF, and the UPF can report its state to the SMF. N9 is the reference point for the connection between different UPFs, and N14 is the reference point connecting between different AMFs, respectively. N15 and N7 are defined since the PCF applies policy to the AMF and SMF, respectively. N12 is required for the AMF to perform authentication of the UE. N8 and N10 are defined because the subscription data of the UE is required for the AMF and SMF.

The 5G core network aims at separating user plane and control plane. The user plane carries user traffic while the control plane carries signaling in the network. In Figure 8, the UPF is in the user plane and all other NFs, i.e., the AMF, SMF, PCF, AF, AUSF, and UDM, are in the control plane. Separating the user and control planes guarantees each plane resource to be scaled independently. It also allows UPFs to be deployed separately from control plane functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF and SMF are independent functions in the control plane. Separated AMF and SMF allow independent evolution and scaling. Other control plane functions like the PCF and AUSF can be separated as shown in Figure 8. Modularized function design enables the 5G core network to support various services flexibly.

Each NF interacts with another NF directly. It is possible to use intermediate functions to route messages from one NF to another NF. In the control plane, a set of interactions between two NFs is defined as service so that its reuse is possible. This service enables support for modularity. The user plane supports interactions such as forwarding operations between different UPFs.

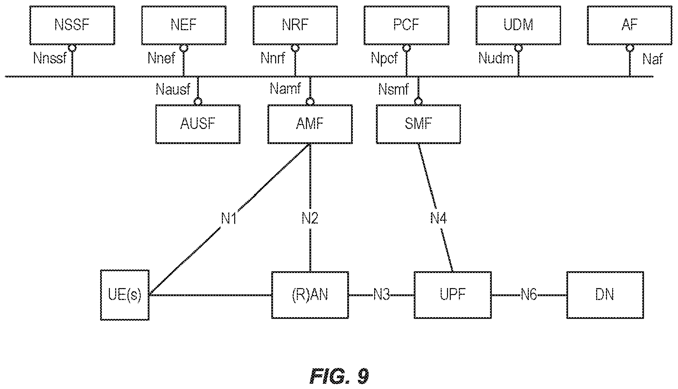

Figure 9 illustrates a 5G network architecture using service-based interfaces between the NFs in the control plane, instead of the point-to-point reference points/interfaces used in the 5G network architecture of Figure 8. However, the NFs described above with reference to Figure 8 correspond to the NFs shown in Figure 9. The service(s) etc. that a NF provides to other authorized NFs can be exposed to the authorized NFs through the service-based interface. In Figure 9 the service based interfaces are indicated by the letter "N" followed by the name of the NF, e.g., Namf for the service based interface of the AMF and Nsmf for the service based interface of the SMF etc. The Network Exposure Function (NEF) and the Network Function (NF) Repository Function (NRF) in Figure 9 are not shown in Figure 8 discussed above. However, it should be clarified that all NFs depicted in Figure 8 can interact with the NEF and the NRF of Figure 9 as necessary, though not explicitly indicated in Figure 8.

Some properties of the NFs shown in Figures 8 and 9 may be described in the following manner. The AMF provides UE-based authentication, authorization, mobility management, etc. A UE even using multiple access technologies is basically connected to a single AMF because the AMF is independent of the access technologies. The SMF is responsible for session management and allocates Internet Protocol (IP) addresses to UEs. It also selects and controls the UPF for data transfer. If a UE has multiple sessions, different SMFs may be allocated to each session to manage them individually and possibly provide different functionalities per session. The AF provides information on the packet flow to the PCF responsible for policy control in order to support Quality of Service (QoS). Based on the information, the PCF determines policies about mobility and session management to make the AMF and SMF operate properly. The AUSF supports authentication function for UEs or similar and thus stores data for authentication of UEs or similar while the UDM stores subscription data of the UE. The Data Network (DN), not part of the 5G core network, provides Internet access or operator services and similar.

An NF may be implemented either as a network element on a dedicated hardware, as a software instance running on a dedicated hardware, or as a virtualized function instantiated on an appropriate platform, e.g., a cloud infrastructure.

NR dynamic spectrum sharing with LTE: The possibility for Dynamic Spectrum Sharing (DSS) with efficient same-frequency-band co-existence of NR with LTE is an important NR requirement. LTE terminals are expected to remain in the networks for at least a few years. Efficient DSS between NR and LTE supports flexible network and spectrum migration possibilities toward NR. NR DSS with LTE within the same spectrum may be realized with LTE and NR being deployed with frequency-overlapping carriers. This scenario is very important as this achieves the most efficient resource sharing. To support DSS, the NR and LTE carriers must be configured in such a way that the corresponding reference signals are not colliding as this will distort the important channel measurements.

PDSCH resource mapping: In NR, a virtual circular buffer is used to match any available code rate by selecting or pruning bits in the buffer. This rate matching is useful since the number of available REs for a UE in a slot may vary due to the presence or absence of various control channel signals, reserved resources or reference signals. For example, the number of REs for PDSCH in a slot configured with CSI-RS would be different from that in slots without CSI-RS. The rate matching can be used to adapt the variations of the available PDSCH REs in this case for a scheduled resource of one or multiple resources blocks and between two to fourteen OFDM symbols. Note that in this case, both the gNB and the UE know the exact number of available PDSCH REs and the RE locations in an RB and in the scheduled resources. This PDSCH to RE mapping information is important for correct PDSCH decoding as otherwise, there could be a mismatch between the REs a PDSCH is transmitted on and the REs over which the PDSCH is received and decoded. Note that in this disclosure, the phrases 'PDSCH resource mapping' and 'PDSCH rate matching' are used alternatingly.

PDSCH resource mapping with RB symbol level granularity: NR Rel-15 supports rate matching patterns (resources not available for PDSCH to RE mapping) with RB and symbol level granularity that can be used for PDSCH resource mapping. When a UE is configured with such a rate matching pattern, the REs included in that rate matching pattern are declared as unavailable for PDSCH. In NR-15, a rate matching pattern with RB and symbol level granularity is configured by the network to the UE via higher layer parameter *RateMatchPattern*.

A list, *rateMatchPatternToAddModList,* of *RateMatchPattern(s)* can be given in a configuration by *PDSCH-Config* or by *ServingCellConfigCommon.* When *rateMatchPatternToAddModList* is given by *PDSCH-Config* configuration, it is defined on a bandwidth part (BWP) level, i.e., within a BWP. When *rateMatchPatternToAddModList* is given by *ServingCellConfigCommon,* it is defined on a serving cell level, i.e., irrespectively of BWP configuration. Up to four *RateMatchPattern(s)* can be defined on a BWP level to a UE, and up to four *RateMatchPattern(s)* can be defined on a cell level (common to all UEs served by the cell).

PDSCH resource mapping with RE level granularity: In Rel-15 NR, one of the ways to configure PDSCH resource mapping with RE level granularity is to configure ZP CSI-RS resources to the UEs. As its name implies, the UE shall not assume that the gNB transmits PDSCH on the REs occupied by the ZP CSI-RS configured to the UE. That is, the PDSCH of the UE shall be rate matched around the ZP CSI-RS resources. ZP CSI-RS resources are configured to the UEs for three purposes. Firstly, ZP CSI-RS can be configured to a UE in order to protect NZP CSI-RS transmissions from one or more neighboring cells. Secondly, ZP CSI-RS can be used for the purposes of indicating whether or not the PDSCH is mapped to Channel State Information Interference Measurement (CSI-IM) resource. Thirdly, (aperiodic) ZP CSI-RS can be used to indicate that the UE shall rate match its PDSCH around a (potentially beamformed) NZP CSI-RS intended for the UE or another UE to measure upon.

In Rel-15 NR, for the PDSCH to RE mapping with RE level granularity, a parameter *LTE-CRS-ToMatchAround* in *ServingCellConfigCommon* can be configured to indicate the presence of a LTE reference signal, the common RS. The RE indicated by this parameter is thus not available for PDSCH to RE mapping. The *ServingCellConfigCommon* information element which indicates the parameter *LTE-CRS-ToMatchAround* and the *RateMatchPatternLTE-CRS* information element from 3GPP TS 38.331 V15.5.1 are shown further below. The UE procedure for rate matching around *LTE-CRS-ToMatchAround* as given in clause 5.1.4.2 of 3GPP TS 38.214 V15.5.0 is replicated below:

"*LTE-CRS-ToMatchAround* in *ServingCellConfigCommon* configuring common RS, in 15 kHz subcarrier spacing applicable only to 15 kHz subcarrier spacing PDSCH, of one LTE carrier in a serving cell. The configuration contains *v-Shift* consisting of LTE-CRS-vshift(s), *nrofCRS-Ports* consisting of LTE-CRS antenna ports 1, 2, or 4 ports, *carrierFreqDL* representing the LTE carrier center subcarrier location determined by offset from (reference) point A, *carrierBandwidthDL* representing the LTE carrier bandwidth, and may also configure *mbsfn-SubframeConfigList* representing a Multi-Broadcast Single Frequency Network (MBSFN) subframe configuration. A UE determines the CRS position within the slot according to Subclause 6.10.1.2 in [TS 36.211], where the slot corresponds to LTE subframe."

*ServingCellConfigCommon* **information element**

```
-- ASN1START
-- TAG-SERVING-CELL-CONFIG-COMMON-START


ServingCellConfigCommon ::=            SEQUENCE {
     physCellId                          PhysCellId
OPTIONAL,    -- Cond HOAndServCellAdd,
     downlinkConfigCommon                DownlinkConfigCommon
OPTIONAL,    -- Cond HOAndServCellAdd

     uplinkConfigCommon                  UplinkConfigCommon
OPTIONAL,    -- Need M
     supplementaryUplinkConfig
UplinkConfigCommon                                 OPTIONAL,    -
- Need S
     n-TimingAdvanceOffset              ENUMERATED { n0, n25600,
n39936 }                       OPTIONAL,    -- Need S
     ssb-PositionsInBurst              CHOICE {
          shortBitmap                       BIT STRING (SIZE
(4)),
          mediumBitmap                      BIT STRING (SIZE
(8)),
          longBitmap                        BIT STRING (SIZE
(64))
     }
OPTIONAL,    -- Cond AbsFreqSSB
     ssb-periodicityServingCell         ENUMERATED { ms5, ms10,
ms20, ms40, ms80, ms160, spare2, spare1 }         OPTIONAL,    --
Need S
     dmrs-TypeA-Position                ENUMERATED {pos2, pos3},
     lte-CRS-ToMatchAround              SetupRelease {
RateMatchPatternLTE-CRS }
OPTIONAL,    -- Need M
     rateMatchPatternToAddModList       SEQUENCE (SIZE
(1..maxNrofRateMatchPatterns)) OF RateMatchPattern
OPTIONAL,    -- Need N
     rateMatchPatternToReleaseList      SEQUENCE (SIZE
(1..maxNrofRateMatchPatterns)) OF RateMatchPatternId
OPTIONAL,    -- Need N
     subcarrierSpacing                  SubcarrierSpacing
OPTIONAL,    -- Cond HOAndServCellAdd
     tdd-UL-DL-ConfigurationCommon      TDD-UL-DL-ConfigCommon
OPTIONAL,    -- Cond TDD
     ss-PBCH-BlockPower                 INTEGER (-60..50),
     ...
}


-- TAG-SERVING-CELL-CONFIG-COMMON-STOP
-- ASN1STOP
```

***RateMatchPatternLTE-CRS* information element**

```
-- ASN1START
-- TAG-RATEMATCHPATTERNLTE-CRS-START

RateMatchPatternLTE-CRS ::=          SEQUENCE {
    carrierFreqDL                        INTEGER (0..16383),
    carrierBandwidthDL                   ENUMERATED {n6, n15, n25,
n50, n75, n100, spare2, spare1},
    mbsfn-SubframeConfigList             EUTRA-MBSFN-
SubframeConfigList
OPTIONAL,   -- Need M
    nrofCRS-Ports                        ENUMERATED {n1, n2, n4},
    v-Shift                              ENUMERATED {n0, n1, n2,
n3, n4, n5}
}

-- TAG-RATEMATCHPATTERNLTE-CRS-STOP
-- ASN1STOP
```

| ***RateMatchPatternLTE-CRS* field descriptions** |
|---|
| ***carrierBandwidthDL*** <br> BW of the LTE carrier in number of PRBs (see TS 38.214, clause 5.1.4.2). |
| ***carrierFreqDL*** <br> Center of the LTE carrier (see TS 38.214, clause 5.1.4.2). |
| ***mbsfn-SubframeConfigList*** <br> LTE MBSFN subframe configuration (see TS 38.214, clause 5.1.4.2). |
| ***nrofCRS-Ports*** <br> Number of LTE CRS antenna port to rate-match around (see TS 38.214, clause 5.1.4.2). |
| ***v-Shift*** <br> Shifting value v-shift in LTE to rate match around LTE CRS (see TS 38.214, clause 5.1.4.2). |

There currently exist certain challenge(s). In the DSS scenario where LTE and NR co-exist in the same spectrum (i.e., in the same set, or partially overlapping set, of resource blocks), a Rel-15 NR UE rate matches PDSCH around the LTE CRS as described above. The number of REs for an LTE CRS per PRB depends on the number of CRS ports. For 1, 2, or 4 port LTE CRSs, the number of REs used per PRB is 8, 16, and 24 respectively. In 15 kHz subcarrier spacing which consists of 12x14 = 168 REs per PRB, the overhead for LTE CRS can be significant. For example, for 4 port LTE CRS, the RE overhead per PRB for an NR UE is 24/168 = 14.28%. Since the NR UE rate matches the PDSCH around LTE CRS REs, the number of REs available for NR PDSCH is reduced. Furthermore, for CSI estimation, the NR UE has to be configured with an additional NR NZP CSI-RS resource, which further reduces the number of REs available for PDSCH. Hence, reduction of the RS overhead for an NR UE in the DSS scenario is an open problem. A similar problem exists when LTE CSI-RS is configured with a large number of CSI-RS ports. If the NR UE rate matches around the LTE CSI-RS, then additional NR NZP CSI-RS resources needs to be configured for CSI estimation which reduces the number of REs available for NR PDSCH.

Systems and methods for NR UE use of LTE reference signals are provided. In some embodiments, a method performed by a NR wireless device for increasing throughput includes: receiving a configuration for at least one LTE reference signal; and using the at least one LTE reference signal. In this way, the need to configure additional NR reference signals can be reduced. As a result, the reference signal overhead for an NR UE in a DSS deployment can be reduced, for example.

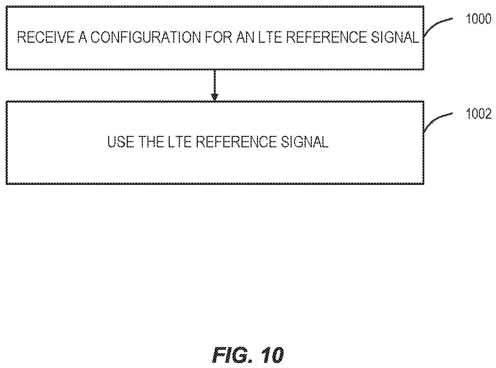

Figure 10 illustrates a method performed by a NR wireless device for increasing throughput. In this embodiment, the NR wireless device receives a configuration for an LTE reference signal (step 1000). The NR wireless device then uses the LTE reference signal (step 1002).

In some embodiments, the NR wireless device is configured to rate match Physical Downlink Shared Channel (PDSCH) around the at least one LTE reference signal. In some embodiments, using the at least one LTE reference signal comprises at least one of the group consisting of: performing a channel state measurement and/or feedback; performing time and/or frequency tracking; and using the at least one LTE reference signal as a quasi-co-located (QCL) source.

In some embodiments, the at least one LTE reference signal is an LTE Cell-specific Reference Signal (CRS) and using the at least one LTE reference signal comprises: using the LTE CRS for Channel State Information (CSI) feedback when LTE CRS is configured with 1, 2, or 4 ports for CSI feedback. In some embodiments, using the at least one LTE reference signal comprises: only using the at least one LTE reference signal within the active NR bandwidth part for CSI measurement.

In some embodiments, receiving the configuration for the at least one LTE reference signal comprises: receiving higher layer signaling of the LTE physical cell ID. In some embodiments, the method also includes using the LTE physical cell ID to generate the LTE CRS sequence.

In some embodiments, the at least one LTE reference signal is configured as a reference signal in a Transmission Configuration Indicator (TCI) state for the NR wireless device. In some embodiments, receiving the configuration comprises: receiving the configuration for at least one LTE reference signal through RRC signaling.

In some embodiments, the NR wireless device is operating in a Dynamic Spectrum Sharing (DSS) system with co-existence of NR and LTE. In some embodiments, LTE and NR are deployed with frequency-overlapping carriers in the DSS system.

With some embodiments of the current disclosure, the number of REs available for NR PDSCHs in an RB can be increased by using the LTE reference signals for CSI feedback for NR, especially in a DSS deployment. In addition, the NR UE can use LTE CRS for fine time and frequency synchronization, in addition to a configured TRS, or even without a configured TRS.

Embodiment 1:

In some embodiments, an NR UE is configured to measure the channel corresponding to LTE CRS for the purposes of CSI estimation in a DSS scenario where LTE and NR co-exist in the same spectrum and shares the same antenna ports.

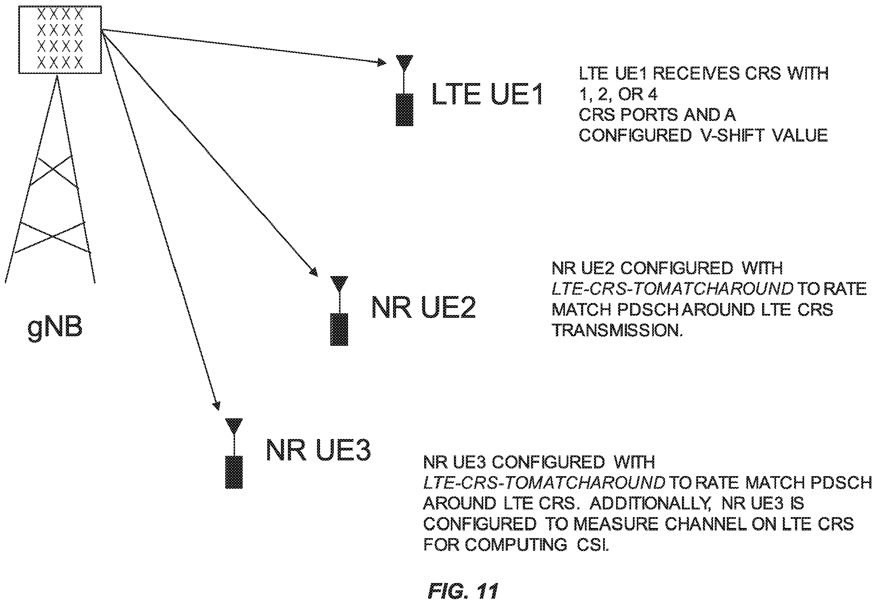

An example is shown in Figure 11. In the example, LTE UE1 and NR UEs 2-3 are served in a DSS scenario. LTE UE1 receives CRS with 1, 2, or 4 CRS ports and a configured v-shift value. NR UE 2 is an NR Rel-15 UE that only rate matches around the LTE CRS. That is, NR UE 2 is configured with LTE-CRS-ToMatchAround so that the NR PDSCH that it receives is rate matched around the LTE CRS pattern indicated by LTE-CRS-ToMatchAround. NR UE 3 is an NR Rel-17 or beyond UE (that applies the principles introduced in the current disclosure) that is capable of measuring the channel corresponding to the LTE CRS for the purposes of CSI estimation and/or for the purpose of channel tracking and synchronization.

Similar to NR UE 2, NR UE 3 is configured with LTE-CRS-ToMatchAround so that the NR PDSCH that it receives is rate matched around the LTE CRS pattern indicated by LTE-CRS-ToMatchAround. In addition to this, NR UE 3 is also configured such that it can measure the channel on LTE CRS, for the purpose of NR UE functionalities, such as computing CSI or perform tracking/synchronization or as a QCL source in a TCI state.

Since PDSCH is rate matched around LTE CRS, NR UE 3 uses an NR PDSCH Demodulation Reference Signal (DMRS) for PDSCH demodulation while using LTE CRS only for NR functionality, e.g., computing CSI. In some variants of this embodiment, NR UE 3 uses LTE CRS for computing CSI when LTE CRS is configured with 1, 2, or 4 ports CSI feedback.

In NR Rel-15, the LTE-CRS-ToMatchAround configured to an NR UE provides information such as carrierBandwidthDL, carrierFreqDL, NRofCRS-Ports, and v-Shift from which the Resource Element (RE) locations of the LTE CRS can be known in the NR UE. However, the information provided in LTE-CRS-ToMatchAround is insufficient to generate the LTE CRS sequence in an NR UE. In order to use LTE CRS for CSI measurement, the LTE CRS sequence has to be generated at an NR UE. Hence, the physical cell ID $N_{\mathrm{ID}}^{\mathrm{cell}}$ corresponding to the LTE cell in the DSS scenario needs to be signaled to the NR UE. In one embodiment, the physical cell ID $N_{\mathrm{ID}}^{\mathrm{cell}}$ corresponding to the LTE cell in the DSS scenario is signaled (example via RRC signaling) to the NR UE. With the RRC signaled $N_{\mathrm{ID}}^{\mathrm{cell}}$, the NR UE can generate

the initial value $c_{init}$ for sequence generator $c(i)$ which is needed to generate the LTE CRS sequence. In addition, the Energy Per Resource Element (EPRE) ratio between NR PDSCH and LTE CRS is also needed in order to derive the correct CQI. This could be signaled directly as part of the LTE-CRS-ToMatchAround information element, or indirectly as an EPRE ratio between a NR reference signal such as a Synchronization Signal Block (SSB) and the LTE CRS.

In most cases, the system bandwidth of LTE (note that LTE CRS is transmitted in the whole system bandwidth) and the active NR bandwidth part in which NR PDSCH is received can be different. Hence, in this embodiment, the NR UE which is configured to use the LTE CRS for CSI feedback only uses LTE CRS within the active NR bandwidth part for CSI measurement.

The benefits of using LTE CRS to replace NR CSI-RS for measurements include:

- Reduced overhead as NR CSI-RS may not need to be configured to the NR UE
- High channel estimation quality due to more CRS REs per RB per antenna ports when compared to CSI-RS REs per RB per antenna port.

The following embodiments 2 and 3 are not according to the invention and are present for illustration purposes only.

Embodiment 2:

In this embodiment, an NR UE is configured to measure the channel corresponding to LTE CSI-RS for the purposes of CSI estimation in a DSS scenario where LTE and NR co-exist in the same spectrum and share the same antenna ports.

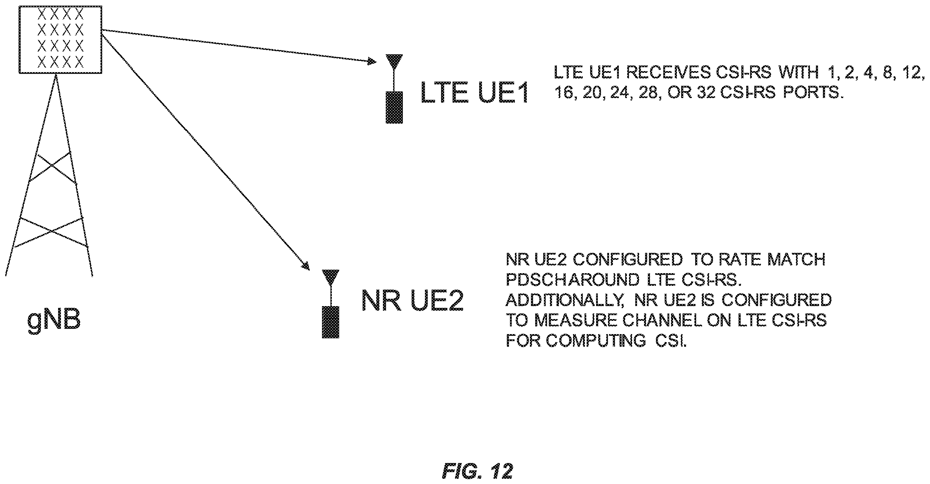

An example is shown in Figure 12. In this example, LTE UE1 and NR UE 2 are served in a DSS scenario. LTE UE1 receives LTE periodic CSI-RS with 1, 2, 4, 8, 12, 16, 20, 24, 28, or 32 ports. NR UE 2 is an NR Rel-17 or beyond capable UE that is capable of measuring the channel corresponding to the LTE CSI-RS for the purposes of CSI estimation. NR UE 2 is configured to rate match NR PDSCH around the LTE CSI-RS pattern. In addition to this, NR UE2 is also configured such that it can measure the channel on LTE CSI-RS for the purpose of computing CSI.

Since PDSCH is rate matched around LTE CSI-RS, NR UE 2 uses NR PDSCH DMRS for PDSCH demodulation while using LTE CSI-RS only for computing CSI. In some variants of this embodiment, NR UE 2 uses LTE CSI-RS for computing CSI when LTE CSI-RS is configured with 1, 2, 4, 8, 12, 16, 24, or 32 ports CSI feedback. LTE CSI-RS with 20 and 28 ports is not used by NR UE 2, as NR does not support CSI feedback for 20 and 28 ports.

For CSI measurement purposes, an NR UE may be signaled with the LTE CSI-RS configuration information including the following, which will help the NR UE generate the LTE CSI-RS sequence:

- Antenna port count
- Resource configuration
- Subframe configuration
- EPRE ratio between NR PDSCH and LTE CSI-RS
- Scrambling Identity or LTE cell ID

For LTE release 14 and later releases, the following additional information may be included:

- Transmission comb
- Frequency domain density
- Code Division Multiplexing (CDM) type

The main benefit of using LTE CSI-RS for NR CSI measurement is reduced overhead as NR CSI-RS does not need to be configured for the NR UE.

Embodiment 3:

In NR, a Tracking Reference Signal (TRS) is used for time/frequency tracking. TRS consists of four periodic single port CSI-RS signals in two consecutive slots, with 2 CSI-RS signals in each of the two slots. The minimum periodicity for TRS is 10ms. Comparing to LTE CRS, TRS is very coarse and thus it is slower in time/frequency tracking. When LTE and NR co-exist in the same spectrum and share a same clock source, it would be beneficial for a NR UE to do time/frequency tracking based on LTE CRS.

Thus, in some embodiments, the NR UE is configured to perform time/frequency tracking based on LTE CRS, either solely or in addition to TRS. For this purpose, the UE may be configured with an LTE physical Cell ID in addition to the information included in the LTE-CRS-ToMatchAround information element. If multiple LTE-CRS-ToMatchArounds are configured, the NR UE is signaled which LTE CRS should be used for time/frequency tracking.

Embodiment 4:

A TCI state is in NR configured by RRC signaling. The Quasi-Co-Location (QCL) framework for NR is needed since the UE needs to know which downlink signal to perform synchronization towards, before receiving a control channel and/or a data channel. If there is a single Transmission and Reception Point (TRP) that serves the UE, there would be less need for a QCL framework, but as deployment gets more advanced (e.g., with multiple TRPs), and if beam based operation is needed, then a QCL framework is needed and there is a need for organizing these relations between a source RS and a target RS.

For example, each TRP and/or each beam transmitted from a TRP may be defined by a certain reference signal, a Synchronization Signal (SS)/Physical Broadcast Channel (PBCH) or a CSI-RS which is the source RS for a QCL relation. When transmissions are switching between these different TRPs/beams, then the UE must be informed that a new source RS should be used for the QCL assumption. When the network informs the UE, the UE will synchronize its receiver using the newly indicated source RS, to be able to receive control and data channels.

To manage these multiple and different configurations of a transmissions, the concept of TCI states are introduced in NR. These TCI states are organized in a list which is configured by RRC signaling. A UE can be configured with up to 128 TCI states simultaneously.

One may in this context interpret each TCI state as a certain configured reference signal.

When configuring the PDSCH, a list of TCI states is defined. Each configured TCI state contains a pointer to a source RS which can be either a CSI-RS resource, a TRS, or an SSB. The TCI state configuration also contains the associated QCL type (A, B, C, or D).

In NR Rel. 15, a TCI state can contain a SSB, a TRS, or a CSI-RS. In some embodiments, the LTE CRS is added as a valid RS that also can be configured in a TCI state for a NR UE. Hence, a TCI state contains an LTE CRS with a configured physical cell ID so that the UE can coherently estimate and perform channel estimation of the channel from the 1, 2, or 4 ports of the CRS.

Embodiment 5:

In some embodiments, when the LTE CRS is configured for CSI measurement for an NR UE, then measurement restriction functionality of the channel measurements is always disabled.

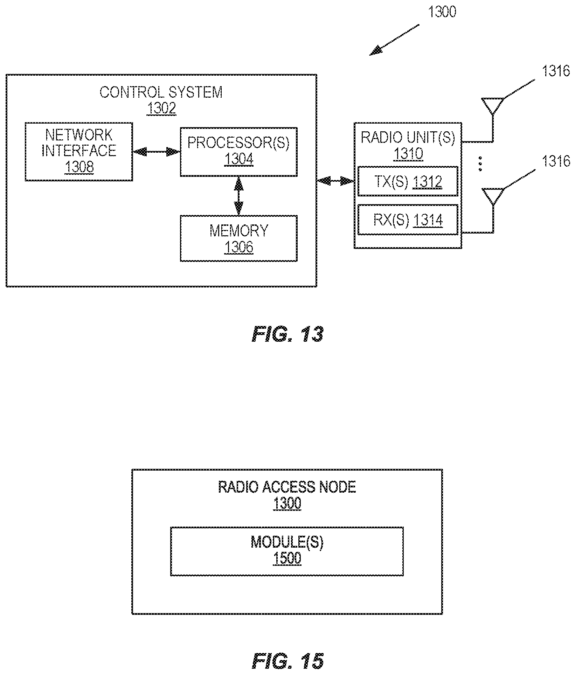

Figure 13 is a schematic block diagram of a radio access node 1300 according to some embodiments of the present disclosure. The radio access node 1300 may be, for example, a base station 702 or 706. As illustrated, the radio access node 1300 includes a control system 1302 that includes one or more processors 1304 (e.g., Central Processing Units (CPUs), Application Specific Integrated Circuits (ASICs), Field Programmable Gate Arrays (FPGAs), and/or the like), memory 1306, and a network interface 1308. The one or more processors 1304 are also referred to herein as processing circuitry. In addition, the radio access node 1300 includes one or more radio units 1310 that each includes one or more transmitters 1312 and one or more receivers 1314 coupled to one or more antennas 1316. The radio units 1310 may be referred to or be part of radio interface circuitry. In some embodiments, the radio unit(s) 1310 is external to the control system 1302 and connected to the control system 1302 via, e.g., a wired connection (e.g., an optical cable). However, in some other embodiments, the radio unit(s) 1310 and potentially the antenna(s) 1316 are integrated together with the control system 1302. The one or more processors 1304 operate to provide one or more functions of a radio access node 1300 as described herein. In some embodiments, the function(s) are implemented in software that is stored, e.g., in the memory 1306 and executed by the one or more processors 1304.

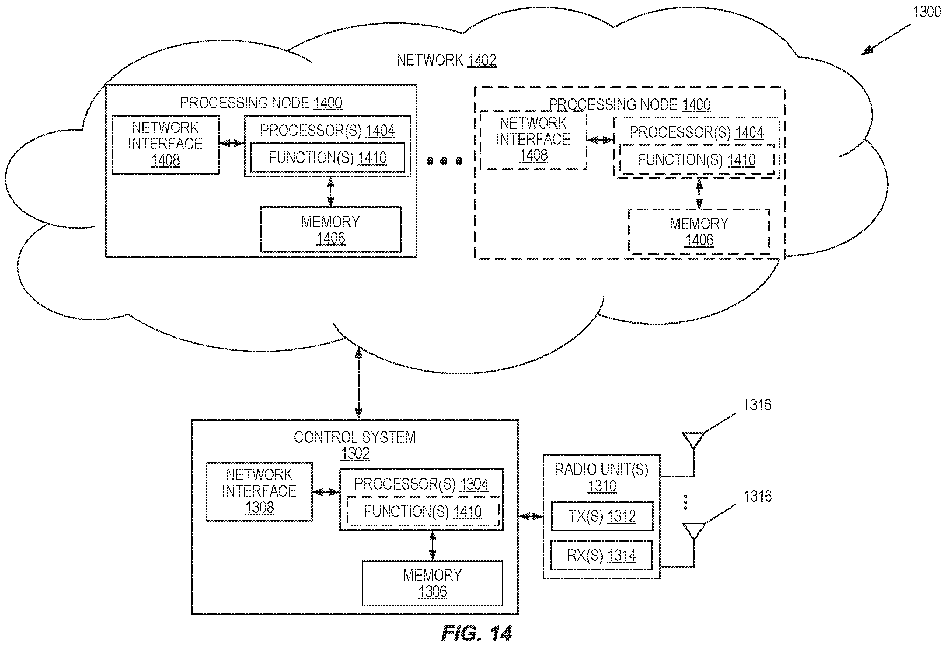

Figure 14 is a schematic block diagram that illustrates a virtualized embodiment of the radio access node 1300 according to some embodiments of the present disclosure. This discussion is equally applicable to other types of network nodes. Further, other types of network nodes may have similar virtualized architectures.

As used herein, a "virtualized" radio access node is an implementation of the radio access node 1300 in which at least a portion of the functionality of the radio access node 1300 is implemented as a virtual component(s) (e.g., via a virtual machine(s) executing on a physical processing node(s) in a network(s)). As illustrated, in this example, the radio access node 1300 includes the control system 1302 that includes the one or more processors 1304 (e.g., CPUs, ASICs, FPGAs, and/or the like), the memory 1306, and the network interface 1308 and the one or more radio units 1310 that each includes the one or more transmitters 1312 and the one or more receivers 1314 coupled to the one or more antennas 1316, as described above. The control system 1302 is connected to the radio unit(s) 1310 via, for example, an optical cable or the like. The control system 1302 is connected to one or more processing nodes 1400 coupled to or included as part of a network(s) 1402 via the network interface 1308. Each processing node 1400 includes one or more processors 1404 (e.g., CPUs, ASICs, FPGAs, and/or the like), memory 1406, and a network interface 1408.

In this example, functions 1410 of the radio access node 1300 described herein are implemented at the one or more processing nodes 1400 or distributed across the control system 1302 and the one or more processing nodes 1400 in any desired manner. In some particular embodiments, some or all of the functions 1410 of the radio access node 1300 described herein are implemented as virtual components executed by one or more virtual machines implemented in a virtual environment(s) hosted by the processing node(s) 1400. As will be appreciated by one of ordinary skill in the art, additional signaling or communication between the processing node(s) 1400 and the control system 1302 is used in order to carry out at least some of the desired functions 1410. Notably, in some embodiments, the control system 1302 may not be included, in which case the radio unit(s) 1310 communicate directly with the processing node(s) 1400 via an appropriate network interface(s).

In some embodiments, a computer program including instructions which, when executed by at least one processor, causes the at least one processor to carry out the functionality of radio access node 1300 or a node (e.g., a processing node 1400) implementing one or more of the functions 1410 of the radio access node 1300 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 15 is a schematic block diagram of the radio access node 1300 according to some other embodiments of the present disclosure. The radio access node 1300 includes one or more modules 1500, each of which is implemented in software. The module(s) 1500 provide the functionality of the radio access node 1300 described herein. This discussion is equally applicable to the processing node 1400 of Figure 14 where the modules 1500 may be implemented at one of the processing nodes 1400 or distributed across multiple processing nodes 1400 and/or distributed across the processing node(s) 1400 and the control system 1302.

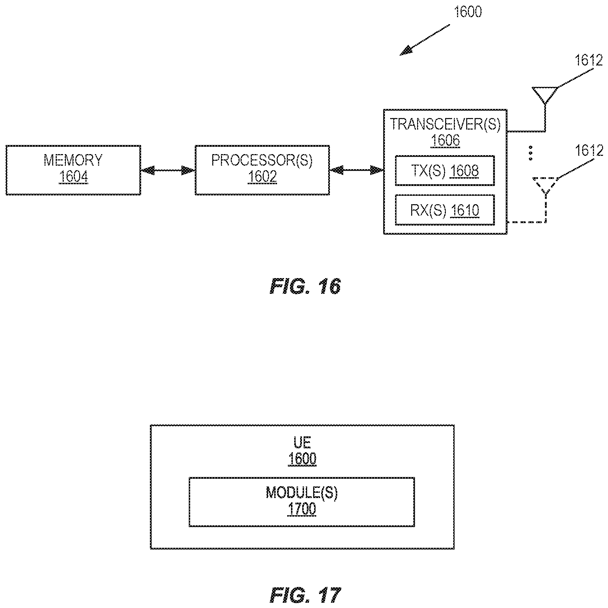

Figure 16 is a schematic block diagram of a UE 1600 according to some embodiments of the present disclosure. As illustrated, the UE 1600 includes one or more processors 1602 (e.g., CPUs, ASICs, FPGAs, and/or the like), memory 1604, and one or more transceivers 1606 each including one or more transmitters 1608 and one or more receivers 1610 coupled to one or more antennas 1612. The transceiver(s) 1606 includes radio-front end circuitry connected to the antenna(s) 1612 that is configured to condition signals communicated between the antenna(s) 1612 and the processor(s) 1602, as will be appreciated by on of ordinary skill in the art. The processors 1602 are also referred to herein as processing circuitry. The transceivers 1606 are also referred to herein as radio circuitry. In some embodiments, the functionality of the UE 1600 described above may be fully or partially implemented in software that is, e.g., stored in the memory 1604 and executed by the processor(s) 1602. Note that the UE 1600 may include additional components not illustrated in Figure 16 such as, e.g., one or more user interface components (e.g., an input/output interface including a display, buttons, a touch screen, a microphone, a speaker(s), and/or the like and/or any other components for allowing input of information into the UE 1600 and/or allowing output of information from the UE 1600), a power supply (e.g., a battery and associated power circuitry), etc.

In some embodiments, a computer program including instructions which, when executed by at least one processor, causes the at least one processor to carry out the functionality of the UE 1600 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 17 is a schematic block diagram of the UE 1600 according to some other embodiments of the present disclosure. The UE 1600 includes one or more modules 1700, each of which is implemented in software. The module(s) 1700 provide the functionality of the UE 1600 described herein.

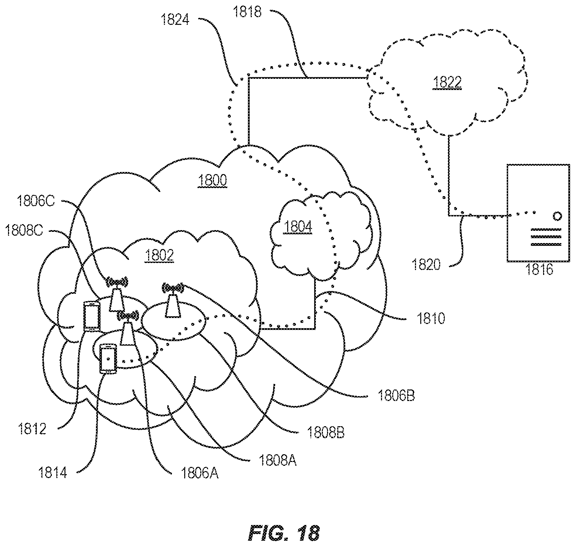

With reference to Figure 18, in accordance with an embodiment, a communication system includes a telecommunication network 1800, such as a 3GPP-type cellular network, which comprises an access network 1802, such as a RAN, and a core network 1804. The access network 1802 comprises a plurality of base stations 1806A, 1806B, 1806C, such as NBs, eNBs, gNBs, or other types of wireless Access Points (APs), each defining a corresponding coverage area 1808A, 1808B, 1808C. Each base station 1806A, 1806B, 1806C is connectable to the core network 1804 over a wired or wireless connection 1810. A first UE 1812 located in coverage area 1808C is configured to wirelessly connect to, or be paged by, the corresponding base station 1806C. A second UE 1814 in coverage area 1808A is wirelessly connectable to the corresponding base station 1806A. While a plurality of UEs 1812, 1814 are illustrated in this example, the disclosed embodiments are equally applicable to a situation where a sole UE is in the coverage area or where a sole UE is connecting to the corresponding base station 1806.

The telecommunication network 1800 is itself connected to a host computer 1816, which may be embodied in the hardware and/or software of a standalone server, a cloud-implemented server, a distributed server, or as processing resources in a server farm. The host computer 1816 may be under the ownership or control of a service provider, or may be operated by the service provider or on behalf of the service provider. Connections 1818 and 1820 between the telecommunication network 1800 and the host computer 1816 may extend directly from the core network 1804 to the host computer 1816 or may go via an optional intermediate network 1822. The intermediate network 1822 may be one of, or a combination of more than one of, a public, private, or hosted network; the intermediate network 1822, if any, may be a backbone network or the Internet; in particular, the intermediate network 1822 may comprise two or more sub-networks (not shown).

The communication system of Figure 18 as a whole enables connectivity between the connected UEs 1812, 1814 and the host computer 1816. The connectivity may be described as an Over-the-Top (OTT) connection 1824. The host computer 1816 and the connected UEs 1812, 1814 are configured to communicate data and/or signaling via the OTT connection 1824, using the access network 1802, the core network 1804, any intermediate network 1822, and possible further infrastructure (not shown) as intermediaries. The OTT connection 1824 may be transparent in the sense that the participating communication devices through which the OTT connection 1824 passes are unaware of routing of uplink and downlink communications. For example, the base station 1806 may not or need not be informed about the past routing of an incoming downlink communication with data originating from the host computer 1816 to be forwarded (e.g., handed over) to a connected UE 1812. Similarly, the base station 1806 need not be aware of the future routing of an outgoing uplink communication originating from the UE 1812 towards the host computer 1816.

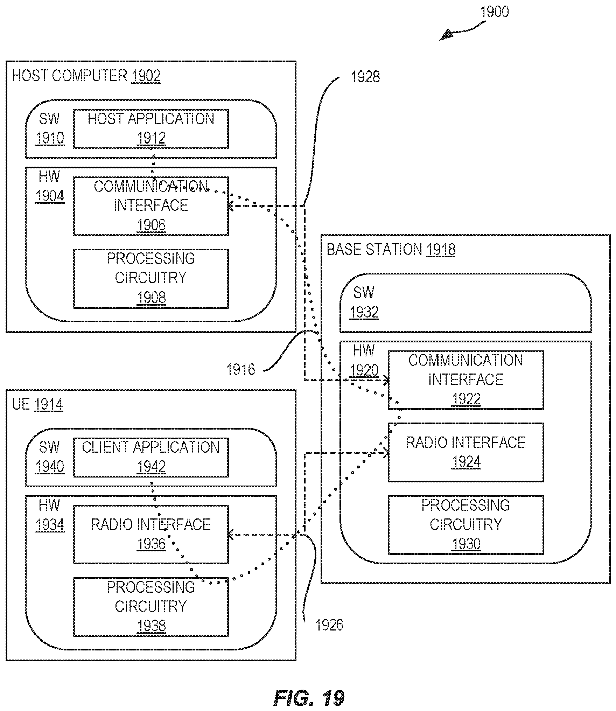

Example implementations, in accordance with an embodiment, of the UE, base station, and host computer discussed in the preceding paragraphs will now be described with reference to Figure 19. In a communication system 1900, a host computer 1902 comprises hardware 1904 including a communication interface 1906 configured to set up and maintain a wired or wireless connection with an interface of a different communication device of the communication system 1900. The host computer 1902 further comprises processing circuitry 1908, which may have storage and/or processing capabilities. In particular, the processing circuitry 1908 may comprise one or more programmable processors, ASICs, FPGAs, or combinations of these (not shown) adapted to execute instructions. The host computer 1902 further comprises software 1910, which is stored in or accessible by the host computer 1902 and executable by the processing circuitry 1908. The software 1910 includes a host application 1912. The host application 1912 may be operable to provide a service to a remote user, such as a UE 1914 connecting via an OTT connection 1916 terminating at the UE 1914 and the host computer 1902. In providing the service to the remote user, the host application 1912 may provide user data which is transmitted using the OTT connection 1916.

The communication system 1900 further includes a base station 1918 provided in a telecommunication system and comprising hardware 1920 enabling it to communicate with the host computer 1902 and with the UE 1914. The hardware 1920 may include a communication interface 1922 for setting up and maintaining a wired or wireless connection with an interface of a different communication device of the communication system 1900, as well as a radio interface 1924 for setting up and maintaining at least a wireless connection 1926 with the UE 1914 located in a coverage area (not shown in Figure 19) served by the base station 1918. The communication interface 1922 may be configured to facilitate a connection 1928 to the host computer 1902. The connection 1928 may be direct or it may pass through a core network (not shown in Figure 19) of the telecommunication system and/or through one or more intermediate networks outside the telecommunication system. In the embodiment shown, the hardware 1920 of the base station 1918 further includes processing circuitry 1930, which may comprise one or more programmable processors, ASICs, FPGAs, or combinations of these (not shown) adapted to execute instructions. The base station 1918 further has software 1932 stored internally or accessible via an external connection.

The communication system 1900 further includes the UE 1914 already referred to. The UE's 1914 hardware 1934 may include a radio interface 1936 configured to set up and maintain a wireless connection 1926 with a base station serving a coverage area in which the UE 1914 is currently located. The hardware 1934 of the UE 1914 further includes processing circuitry 1938, which may comprise one or more programmable processors, ASICs, FPGAs, or combinations of these (not shown) adapted to execute instructions. The UE 1914 further comprises software 1940, which is stored in or accessible by the UE 1914 and executable by the processing circuitry 1938. The software 1940 includes a client application 1942. The client application 1942 may be operable to provide a service to a human or non-human user via the UE 1914, with the support of the host computer 1902. In the host computer 1902, the executing host application 1912 may communicate with the executing client application 1942 via the OTT connection 1916 terminating at the UE 1914 and the host computer 1902. In providing the service to the user, the client application 1942 may receive request data from the host application 1912 and provide user data in response to the request data. The OTT connection 1916 may transfer both the request data and the user data. The client application 1942 may interact with the user to generate the user data that it provides.

It is noted that the host computer 1902, the base station 1918, and the UE 1914 illustrated in Figure 19 may be similar or identical to the host computer 1816, one of the base stations 1806A, 1806B, 1806C, and one of the UEs 1812, 1814 of Figure 18, respectively. This is to say, the inner workings of these entities may be as shown in Figure 19 and independently, the surrounding network topology may be that of Figure 18.

In Figure 19, the OTT connection 1916 has been drawn abstractly to illustrate the communication between the host computer 1902 and the UE 1914 via the base station 1918 without explicit reference to any intermediary devices and the precise routing of messages via these devices. The network infrastructure may determine the routing, which may be configured to hide from the UE 1914 or from the service provider operating the host computer 1902, or both. While the OTT connection 1916 is active, the network infrastructure may further take decisions by which it dynamically changes the routing (e.g., on the basis of load balancing consideration or reconfiguration of the network).

The wireless connection 1926 between the UE 1914 and the base station 1918 is in accordance with the teachings of the embodiments described throughout this disclosure. One or more of the various embodiments improve the performance of OTT services provided to the UE 1914 using the OTT connection 1916, in which the wireless connection 1926 forms the last segment. More precisely, the teachings of these embodiments may improve the e.g., data rate, latency, power consumption, etc. and thereby provide benefits such as e.g., reduced user waiting time, relaxed restriction on file size, better responsiveness, extended battery lifetime, etc.

A measurement procedure may be provided for the purpose of monitoring data rate, latency, and other factors on which the one or more embodiments improve. There may further be an optional network functionality for reconfiguring the OTT connection 1916 between the host computer 1902 and the UE 1914, in response to variations in the measurement results. The measurement procedure and/or the network functionality for reconfiguring the OTT connection 1916 may be implemented in the software 1910 and the hardware 1904 of the host computer 1902 or in the software 1940 and the hardware 1934 of the UE 1914, or both. In some embodiments, sensors (not shown) may be deployed in or in association with communication devices through which the OTT connection 1916 passes; the sensors may participate in the measurement procedure by supplying values of the monitored quantities exemplified above, or supplying values of other physical quantities from which the software 1910, 1940 may compute or estimate the monitored quantities. The reconfiguring of the OTT connection 1916 may include message format, retransmission settings, preferred routing, etc.; the reconfiguring need not affect the base station 1918, and it may be unknown or imperceptible to the base station 1918. Such procedures and functionalities may be known and practiced in the art. In certain embodiments, measurements may involve proprietary UE signaling facilitating the host computer 1902's measurements of throughput, propagation times, latency, and the like. The measurements may be implemented in that the software 1910 and 1940 causes messages to be transmitted, in particular empty or 'dummy' messages, using the OTT connection 1916 while it monitors propagation times, errors, etc.

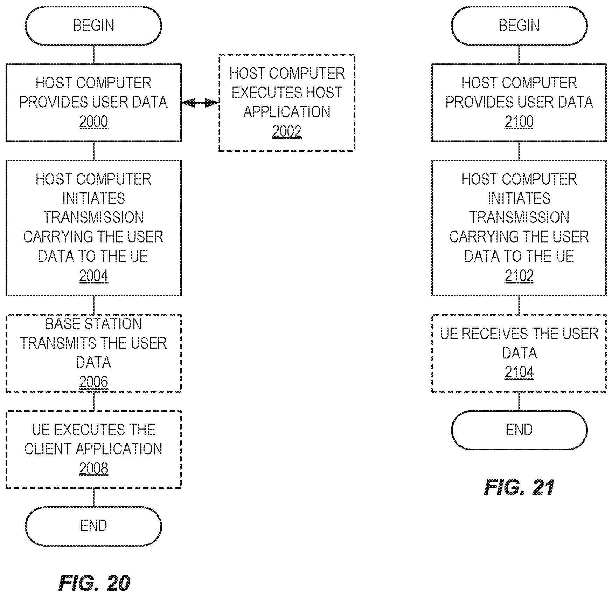

Figure 20 is a flowchart illustrating a method implemented in a communication system, in accordance with one embodiment. The communication system includes a host computer, a base station, and a UE which may be those described with reference to Figures 18 and 19. For simplicity of the present disclosure, only drawing references to Figure 20 will be included in this section. In step 2000, the host computer provides user data. In sub-step 2002 (which may be optional) of step 2000, the host computer provides the user data by executing a host application. In step 2004, the host computer initiates a transmission carrying the user data to the UE. In step 2006 (which may be optional), the base station transmits to the UE the user data which was carried in the transmission that the host computer initiated, in accordance with the teachings of the embodiments described throughout this disclosure. In step 2008 (which may also be optional), the UE executes a client application associated with the host application executed by the host computer.

Figure 21 is a flowchart illustrating a method implemented in a communication system, in accordance with one embodiment. The communication system includes a host computer, a base station, and a UE which may be those described with reference to Figures 18 and 19. For simplicity of the present disclosure, only drawing references to Figure 21 will be included in this section. In step 2100 of the method, the host computer provides user data. In an optional sub-step (not shown) the host computer provides the user data by executing a host application. In step 2102, the host computer initiates a transmission carrying the user data to the UE. The transmission may pass via the base station, in accordance with the teachings of the embodiments described throughout this disclosure. In step 2104 (which may be optional), the UE receives the user data carried in the transmission.

Figure 20 is a flowchart illustrating a method implemented in a communication system, in accordance with one embodiment. The communication system includes a host computer, a base station, and a UE which may be those described with reference to Figures 18 and 19. For simplicity of the present disclosure, only drawing references to Figure 20 will be included in this section. In step 2000 (which may be optional), the UE receives input data provided by the host computer. Additionally or alternatively, in step 2002, the UE provides user data. In sub-step 2004 (which may be optional) of step 2000, the UE provides the user data by executing a client application. In sub-step 2006 (which may be optional) of step 2002, the UE executes a client application which provides the user data in reaction to the received input data provided by the host computer. In providing the user data, the executed client application may further consider user input received from the user. Regardless of the specific manner in which the user data was provided, the UE initiates, in sub-step 2008 (which may be optional), transmission of the user data to the host computer. In step 2010 of the method, the host computer receives the user data transmitted from the UE, in accordance with the teachings of the embodiments described throughout this disclosure.

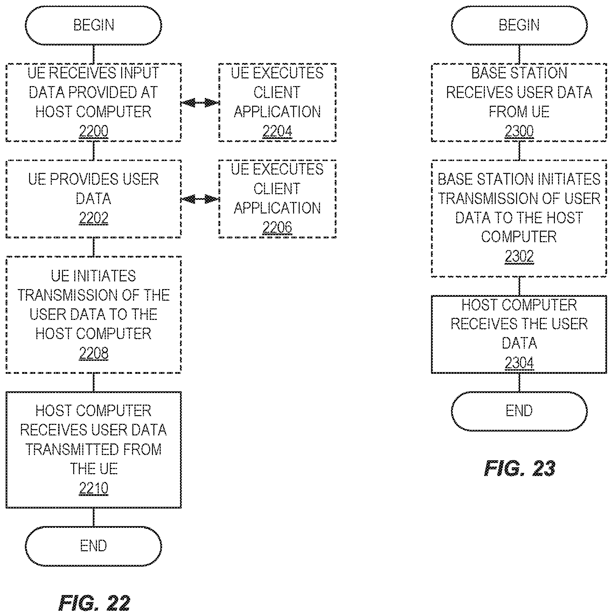

Figure 23 is a flowchart illustrating a method implemented in a communication system, in accordance with one embodiment. The communication system includes a host computer, a base station, and a UE which may be those described with reference to Figures 18 and 19. For simplicity of the present disclosure, only drawing references to Figure 23 will be included in this section. In step 2300 (which may be optional), in accordance with the teachings of the embodiments described throughout this disclosure, the base station receives user data from the UE. In step 2302 (which may be optional), the base station initiates transmission of the received user data to the host computer. In step 2304 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

- 3GPP Third Generation Partnership Project
- 5G Fifth Generation
- 5GC Fifth Generation Core
- AF Application Function
- AMF Access and Mobility Management Function
- AN Access Network
- AP Access Point
- ASIC Application Specific Integrated Circuit
- AUSF Authentication Server Function
- BWP Bandwidth Part
- CDM Code Division Multiplexing
- CP Cyclic Prefix
- CPU Central Processing Unit
- CQI Channel Quality Information
- CRB Common Resource Block
- CRS Cell-specific Reference Signal
- CSI Channel State Information

- CSI-IM Channel State Information Interference Measurement
- CSI-RS Channel State Information Reference Signal
- DFT Discrete Fourier Transform
- DMRS Demodulation Reference Signal
- DN Data Network
- DSP Digital Signal Processor
- DSS Dynamic Spectrum Sharing
- eNB Enhanced or Evolved Node B
- EPRE Energy Per Resource Element
- FPGA Field Programmable Gate Array
- GHz Gigahertz
- gNB New Radio Base Station
- HSS Home Subscriber Server

(continued)

| | |
|---|---|
| • IP | Internet Protocol |
| • LTE | Long Term Evolution |
| • MBSFN | Multi-Broadcast Single Frequency Network |
| • MME | Mobility Management Entity |
| • MTC | Machine Type Communication |
| • NEF | Network Exposure Function |
| • NF | Network Function |
| • NR | New Radio |
| • NRF | Network Function Repository Function |
| • NSSF | Network Slice Selection Function |
| • NZP | Non Zero Power |
| • OFDM | Orthogonal Frequency Division Multiplexing |
| • OTT | Over-the-Top |
| • PCF | Policy Control Function |
| • PDCCH | Physical Downlink Control Channel |
| • PDCH | Physical Data Channel |
| • PDSCH | Physical Downlink Shared Channel |
| • P-GW | Packet Data Network Gateway |
| • PMI | Precoder Matrix Indicator |
| • PRB | Physical Resource Block |

| | |
|---|---|
| • PSS | Primary Synchronization Signal |
| • PUSCH | Physical Uplink Shared Channel |
| • QCL | Quasi Colocation |
| • QoS | Quality of Service |
| • RAM | Random Access Memory |
| • RAN | Radio Access Network |
| • RAT | Radio Access Technology |
| • RB | Resource Block |
| • RE | Resource Element |
| • RI | Rank Indicator |
| • ROM | Read Only Memory |
| • RRC | Radio Resource Control |
| • RRH | Remote Radio Head |
| • RS | Reference Signal |
| • RTT | Round Trip Time |
| • SCEF | Service Capability Exposure Function |
| • SMF | Session Management Function |
| • SS | Synchronization Signal |
| • SSB | Synchronization Signal Block |
| • SSS | Secondary Synchronization Signal |
| • TCI | Transmission Configuration Indicator |
| • TRS | Tracking Reference Signal |
| • UDM | Unified Data Management |
| • UE | User Equipment |
| • UPF | User Plane Function |
| • ZP | Zero Power |

Those skilled in the art will recognize improvements and modifications to the embodiments of the present disclosure.

**EP 3 987 708 B1**

**Claims**

1.  A method performed by a New Radio, NR, wireless device for increasing throughput, the method comprising:

    receiving (1000) a configuration for at least one Long Term Evolution, LTE, Cell-Specific Reference Signal, CRS; and
    using (1002) the at least one LTE CRS for Channel State Information, CSI, feedback when the LTE CRS is configured with 1, 2, or 4 ports for the CSI feedback.

2.  The method of claim 1 wherein using the at least one LTE CRS comprises:
    only using the at least one LTE CRS within an active NR bandwidth part for CSI measurement.

3.  The method of claim 1 or 2 wherein receiving the configuration for the at least one LTE CRS comprises:
    receiving higher layer signaling of an LTE physical cell ID.

4.  The method of claim 3 further comprising:
    using the LTE physical cell ID to generate an LTE CRS sequence.

5.  The method of any one of claims 1 to 4 wherein:

    - the at least one LTE CRS is configured as a reference signal in a Transmission Configuration Indicator, TCI, state for the NR wireless device.

6.  The method of any of claims 1 to 5 wherein receiving the configuration comprises:
    receiving the configuration for at least one LTE CRS through Radio Resource Control, RRC, signaling.

7.  The method of claim 6 wherein the NR wireless device is operating in a Dynamic Spectrum Sharing, DSS, system with co-existence of NR and LTE.

8.  The method of claim 7 wherein LTE and NR are deployed with frequency-overlapping carriers in the DSS system.

9.  A method performed by a base station for increasing throughput, the method comprising:

    providing, to a New Radio, NR, wireless device, a configuration for at least one Long Term Evolution, LTE, Cell-Specific Reference Signal, CRS; and
    instructing the NR wireless device to use the at least one LTE CRS for Channel State Information, CSI, feedback when the LTE CRS is configured with 1, 2, or 4 ports for CSI feedback.

10. The method of claim 9 wherein:

    - providing the configuration for the at least one LTE CRS comprises: providing higher layer signaling of an LTE physical cell ID; and/or
    - the at least one LTE CRS is configured as a reference signal in a Transmission Configuration Indicator, TCI, state for the NR wireless device; and/or
    - the base station is an NR base station.

11. The method of any of claims 9 or 10 wherein the base station is operating in a Dynamic Spectrum Sharing, DSS, system with co-existence of NR and LTE, wherein, optionally, LTE and NR are deployed with frequency-overlapping carriers in the DSS system.

12. A computer-readable medium (1604, 1304) comprising code portions which:

    when executed on a processor (1602) of a New Radio, NR, wireless device (1600), configure the processor to perform the steps of a method according to any one of claims 1 to 8; or
    when executed on a processor (1304) of a base station (1300), configure the processor to perform the steps of a method according to any one of claims 9 to 11.

13. A New Radio, NR, wireless device (1600) for increasing throughput, the NR wireless device (1600) comprising:

one or more processors (1602); and
memory (1604) storing instructions executable by the one or more processors, whereby the NR wireless device (1600) is operable to perform the method of any one of claims 1 to 8.

**14.** A base station (1300) for increasing throughput, the base station (1300) comprising:

one or more processors (1304); and
memory (1306) comprising instructions to cause the base station (1300) to perform the method of any one of claims 9 to 11.

**Patentansprüche**

**1.** Verfahren zur Durchsatzerhöhung, das von einer drahtlosen New-Radio-,NR-,Vorrichtung durchgeführt wird, wobei das Verfahren umfasst:

Empfangen (1000) einer Konfiguration für mindestens ein zellspezifisches Long-Term-Evolution-,LTE- ,Referenzsignal, CRS; and
Verwenden (1002) des mindestens einen LTE-CRS für Kanalzustandsinformations-,CSI-,Rückmeldung, wenn das LTE-CRS mit 1, 2 oder 4 Ports für die CSI-Rückmeldung konfiguriert ist.

**2.** Verfahren nach Anspruch 1, wobei das Verwenden des mindestens einen LTE-CRS umfasst:
Verwenden des mindestens einen LTE-CRS nur innerhalb eines aktiven NR-Bandbreitenteils für CSI-Messung.

**3.** Verfahren nach Anspruch 1 oder 2, wobei das Empfangen der Konfiguration für das mindestens eine LTE-CRS umfasst:
Empfangen einer ID einer physikalischen LTE-Zelle über Signalisierung der oberen Schichten.

**4.** Verfahren nach Anspruch 3, ferner umfassend:
Verwenden der ID der physikalischen LTE-Zelle zum Erzeugen einer LTE-CRS-Folge.

**5.** Verfahren nach einem der Ansprüche 1 bis 4, wobei:

- das mindestens eine LTE-CRS als Referenzsignal in einem Übertragungskonfigurationsindikator-,TCI- ,Zustand für die drahtlose NR-Vorrichtung konfiguriert ist.

**6.** Verfahren nach einem der Ansprüche 1 bis 5, wobei das Empfangen der Konfiguration umfasst:
Empfangen der Konfiguration für mindestens ein LTE-CRS über Funkressourcensteuerungs-,RRC-,Signalisierung.

**7.** Verfahren nach Anspruch 6, wobei die drahtlose NR-Vorrichtung in einem Dynamic-Spectrum-Sharing-,DSS- ,System bei Koexistenz von NR und LTE operiert.

**8.** Verfahren nach Anspruch 7, wobei LTE und NR mit Frequenz überlappenden Trägern im DSS-System bereitgestellt werden.

**9.** Verfahren zur Durchsatzerhöhung, das von einer Basisstation durchgeführt wird, wobei das Verfahren umfasst:

Bereitstellen einer Konfiguration für mindestens ein zellspezifisches Long-Term-Evolution-,LTE- ,Referenzsignal, CRS, für eine drahtlose New-Radio- ,NR-,Vorrichtung; und
Anweisen der drahtlosem NR-Vorrichtung, das mindestens eine LTE-CRS für Kanalzustandsinformations-,CSI- ,Rückmeldung zu verwenden, wenn das LTE-CRS mit 1, 2 oder 4 Ports für die CSI-Rückmeldung konfiguriert ist.

**10.** Verfahren nach Anspruch 9, wobei:

- das Bereitstellen der Konfiguration für das mindestens eine LTE-CRS umfasst: Bereitstellen einer ID einer physikalischen LTE-Zelle über Signalisierung der oberen Schichten; und/oder
- das mindestens eine LTE-CRS als Referenzsignal in einem Übertragungskonfigurationsindikator-,TCI- ,Zustand für die drahtlose NR-Vorrichtung konfiguriert ist; und/oder
- die Basisstation eine NR-Basisstation ist.

**11.** Verfahren nach einem der Ansprüche 9 oder 10, wobei die Basisstation in einem Dynamic-Spectrum-Sharing- ,DSS-, System bei Koexistenz von NR und LTE operiert, wobei LTE und NR optional mit Frequenz überlappenden Trägern im DSS-System bereitgestellt werden.

**12.** Computerlesbares Medium (1604, 1304), umfassend Codeabschnitte, die:

bei Ausführung auf einem Prozessor (1602) einer drahtlosen New-Radio-,NR-,Vorrichtung (1600) den Prozessor zum Ausführen der Schritte eines Verfahrens nach einem der Ansprüche 1 bis 8 konfigurieren; oder
bei Ausführung auf einem Prozessor (1304) einer Basisstation (1300) den Prozessor zum Ausführen der Schritte eines Verfahrens nach einem der Ansprüche 9 bis 11 konfigurieren.

**13.** Drahtlose New-Radio-,NR-,Vorrichtung (1600) zur Durchsatzerhöhung, wobei die drahtlose NR-Vorrichtung (1600) umfasst:

einen oder mehrere Prozessoren (1602); und
Speicher (1604), der Anweisungen speichert, die von dem einen oder den mehreren Prozessoren ausgeführt werden können, wobei die drahtlose NR-Vorrichtung (1600) zum Durchführen des Verfahrens nach einem der Ansprüche 1 bis 8 ausgelegt ist.

**14.** Basisstation (1300) zur Durchsatzerhöhung, wobei die Basisstation (1300) umfasst:

einen oder mehrere Prozessoren (1304); und
Speicher (1306), der Anweisungen zum Veranlassen der Basisstation (1300) zum Durchführen des Verfahrens nach einem der Ansprüche 9 bis 11 umfasst.

**Revendications**

**1.** Procédé réalisé par un dispositif sans fil nouvelle radio, NR, pour une augmentation de débit, le procédé comprenant :

la réception (1000) d'une configuration pour au moins un signal de référence spécifique à la cellule, CRS, d'évolution à long terme, LTE ; et
l'utilisation (1002) de l'au moins un CRS LTE pour une rétroaction d'informations d'état de canal, CSI, lorsque le CRS LTE est configuré avec 1, 2 ou 4 ports pour la rétroaction de CSI.

**2.** Procédé selon la revendication 1, dans lequel l'utilisation de l'au moins un CRS LTE comprend :
l'utilisation uniquement de l'au moins un CRS LTE à l'intérieur d'une partie de bande passante NR active pour une mesure de CSI.

**3.** Procédé selon la revendication 1 ou 2, dans lequel la réception de la configuration pour l'au moins un CRS LTE comprend :
la réception d'une signalisation de couche supérieure d'un identifiant de cellule physique LTE.

**4.** Procédé selon la revendication 3, comprenant en outre :
l'utilisation de l'identifiant de cellule physique LTE pour générer une séquence de CRS LTE.

**5.** Procédé selon l'une quelconque des revendications 1 à 4, dans lequel :

- l'au moins un CRS LTE est configuré en tant que signal de référence dans un état d'indicateur de configuration de transmission, TCI, pour le dispositif sans fil NR.

**6.** Procédé selon l'une quelconque des revendications 1 à 5, dans lequel la réception de la configuration comprend :
la réception de la configuration pour au moins un CRS LTE par l'intermédiaire d'une signalisation de commande de ressources radio, RRC.

EP 3 987 708 B1

**7.** Procédé selon la revendication 6, dans lequel le dispositif sans fil NR fonctionne dans un système de partage de spectre dynamique, DSS, avec coexistence de NR et LTE.

**8.** Procédé selon la revendication 7, dans lequel LTE et NR sont déployés avec des porteuses à chevauchement de fréquences dans le système DSS.

**9.** Procédé réalisé par une station de base pour une augmentation de débit, le procédé comprenant :

la fourniture, à un dispositif sans fil nouvelle radio, NR, d'une configuration pour au moins un signal de référence spécifique à la cellule, CRS, d'évolution à long terme, LTE ; et
l'instruction au dispositif sans fil NR d'utiliser l'au moins un CRS LTE pour une rétroaction d'informations d'état de canal, CSI, lorsque le CRS LTE est configuré avec 1, 2 ou 4 ports pour la rétroaction de CSI.

**10.** Procédé selon la revendication 9, dans lequel :

- la fourniture de la configuration pour l'au moins un CRS LTE comprend : la fourniture d'une signalisation de couche supérieure d'un identifiant de cellule physique LTE ; et/ou
- l'au moins un CRS LTE est configuré en tant que signal de référence dans un état d'indicateur de configuration de transmission, TCI, pour le dispositif sans fil NR ; et/ou
- la station de base est une station de base NR.

**11.** Procédé selon la revendication 9 ou 10, dans lequel la station de base fonctionne dans un système de partage de spectre dynamique, DSS, avec coexistence de NR et LTE, dans lequel, facultativement, LTE et NR sont déployés avec des porteuses à chevauchement de fréquences dans le système DSS.

**12.** Support lisible par ordinateur (1604, 1304) comprenant des parties de code qui :

lorsqu'elles sont exécutées sur un processeur (1602) d'un dispositif sans fil nouvelle radio, NR, (1600), configurent le processeur pour réaliser les étapes d'un procédé selon l'une quelconque des revendications 1 à 8 ; ou
lorsqu'elles sont exécutées sur un processeur (1304) d'une station de base (1300), configurent le processeur pour réaliser les étapes d'un procédé selon l'une quelconque des revendications 9 à 11.

**13.** Dispositif sans fil nouvelle radio, NR, (1600) pour une augmentation de débit, le dispositif sans fil NR (1600) comprenant :

un ou plusieurs processeurs (1602) ; et
une mémoire (1604) stockant des instructions exécutables par les un ou plusieurs processeurs, de telle manière que le dispositif sans fil NR (1600) soit exploitable pour réaliser le procédé selon l'une quelconque des revendications 1 à 8.

**14.** Station de base (1300) pour une augmentation de débit, la station de base (1300) comprenant :

un ou plusieurs processeurs (1304) ; et
une mémoire (1306) comprenant des instructions pour amener la station de base (1300) à réaliser le procédé selon l'une quelconque des revendications 9 à 11.

FIG. 1

SUB-FRAME ($T_{SUBFRAME}$ = 1 MS)

RADIO FRAME ($T_{FRAME}$ = 10 MS)

#0    #1    ...    #9

*FIG. 2*

ONE SLOT (14 SYMBOLS)

PDCH (DATA)        CONTROL (PDCCH), POSSIBLY DATA

*FIG. 3*

FIG. 4

*FIG. 5*

FIG. 6

*FIG. 7*

EP 3 987 708 B1

31

*FIG. 8*

**FIG. 9**

RECEIVE A CONFIGURATION FOR AN LTE REFERENCE SIGNAL ⟋ 1000

↓

USE THE LTE REFERENCE SIGNAL ⟋ 1002

*FIG. 10*

gNB

LTE UE1

LTE UE1 RECEIVES CRS WITH 1, 2, OR 4 CRS PORTS AND A CONFIGURED V-SHIFT VALUE

NR UE2

NR UE2 CONFIGURED WITH *LTE-CRS-TOMATCHAROUND* TO RATE MATCH PDSCH AROUND LTE CRS TRANSMISSION.

NR UE3

NR UE3 CONFIGURED WITH *LTE-CRS-TOMATCHAROUND* TO RATE MATCH PDSCH AROUND LTE CRS. ADDITIONALLY, NR UE3 IS CONFIGURED TO MEASURE CHANNEL ON LTE CRS FOR COMPUTING CSI.

*FIG. 11*

EP 3 987 708 B1

LTE UE1 RECEIVES CSI-RS WITH 1, 2, 4, 8, 12, 16, 20, 24, 28, OR 32 CSI-RS PORTS.

LTE UE1

NR UE2 CONFIGURED TO RATE MATCH PDSCH AROUND LTE CSI-RS. ADDITIONALLY, NR UE2 IS CONFIGURED TO MEASURE CHANNEL ON LTE CSI-RS FOR COMPUTING CSI.

NR UE2

gNB

*FIG. 12*

1300

1316

1316

CONTROL SYSTEM
1302

NETWORK
INTERFACE
1308

PROCESSOR(S)
1304

MEMORY
1306

RADIO UNIT(S)
1310

TX(S) 1312

RX(S) 1314

**FIG. 13**

RADIO ACCESS NODE
1300

MODULE(S)
1500

**FIG. 15**

FIG. 14

1600

1612

TRANSCEIVER(S)
1606

TX(S) 1608

RX(S) 1610

1612

MEMORY
1604

PROCESSOR(S)
1602

**FIG. 16**

UE
1600

MODULE(S)
1700

**FIG. 17**

**FIG. 18**

EP 3 987 708 B1

1900

HOST COMPUTER 1902

SW 1910 | HOST APPLICATION 1912

HW 1904 | COMMUNICATION INTERFACE 1906

PROCESSING CIRCUITRY 1908

1928

BASE STATION 1918

SW 1932

HW 1920 | COMMUNICATION INTERFACE 1922

RADIO INTERFACE 1924

PROCESSING CIRCUITRY 1930

1916

UE 1914

SW 1940 | CLIENT APPLICATION 1942

HW 1934 | RADIO INTERFACE 1936

PROCESSING CIRCUITRY 1938

1926

FIG. 19

41

```
        ┌─────────┐
        │  BEGIN  │
        └─────────┘
             │
  ┌──────────────────┐      ┌──────────────────┐
  │  HOST COMPUTER   │      │  HOST COMPUTER   │
  │ PROVIDES USER    │◄────►│ EXECUTES HOST    │
  │ DATA             │      │ APPLICATION      │
  │ 2000             │      │ 2002             │
  └──────────────────┘      └──────────────────┘
             │
  ┌──────────────────┐
  │  HOST COMPUTER   │
  │  INITIATES       │
  │  TRANSMISSION    │
  │  CARRYING THE    │
  │  USER DATA TO    │
  │  THE UE          │
  │  2004            │
  └──────────────────┘
             │
  ┌ ─ ─ ─ ─ ─ ─ ─ ─ ┐
  │  BASE STATION    │
    TRANSMITS THE
  │  USER DATA       │
    2006
  └ ─ ─ ─ ─ ─ ─ ─ ─ ┘
             │
  ┌ ─ ─ ─ ─ ─ ─ ─ ─ ┐
  │ UE EXECUTES THE  │
    CLIENT APPLICATION
  │ 2008             │
  └ ─ ─ ─ ─ ─ ─ ─ ─ ┘
             │
        ┌─────────┐
        │   END   │
        └─────────┘
```

**FIG. 20**

```
        ┌─────────┐
        │  BEGIN  │
        └─────────┘
             │
  ┌──────────────────┐
  │  HOST COMPUTER   │
  │ PROVIDES USER    │
  │ DATA             │
  │ 2100             │
  └──────────────────┘
             │
  ┌──────────────────┐
  │  HOST COMPUTER   │
  │  INITIATES       │
  │  TRANSMISSION    │
  │  CARRYING THE    │
  │  USER DATA TO    │
  │  THE UE          │
  │  2102            │
  └──────────────────┘
             │
  ┌ ─ ─ ─ ─ ─ ─ ─ ─ ┐
  │ UE RECEIVES THE  │
    USER DATA
  │ 2104             │
  └ ─ ─ ─ ─ ─ ─ ─ ─ ┘
             │
        ┌─────────┐
        │   END   │
        └─────────┘
```

**FIG. 21**

```
          ┌─────────────┐
          │    BEGIN     │
          └──────┬──────┘
                 │
   ┌─────────────┴─────────────┐        ┌─────────────────┐
   │ UE RECEIVES INPUT         │        │ UE EXECUTES     │
   │ DATA PROVIDED AT          │◄──────►│ CLIENT          │
   │ HOST COMPUTER             │        │ APPLICATION     │
   │ 2200                      │        │ 2204            │
   └─────────────┬─────────────┘        └─────────────────┘
                 │
   ┌─────────────┴─────────────┐        ┌─────────────────┐
   │ UE PROVIDES USER          │        │ UE EXECUTES     │
   │ DATA                      │◄──────►│ CLIENT          │
   │ 2202                      │        │ APPLICATION     │
   │                           │        │ 2206            │
   └─────────────┬─────────────┘        └─────────────────┘
                 │
   ┌─────────────┴─────────────┐
   │ UE INITIATES              │
   │ TRANSMISSION OF THE       │
   │ USER DATA TO THE          │
   │ HOST COMPUTER             │
   │ 2208                      │
   └─────────────┬─────────────┘
                 │
   ┌─────────────┴─────────────┐
   │ HOST COMPUTER             │
   │ RECEIVES USER DATA        │
   │ TRANSMITTED FROM          │
   │ THE UE                    │
   │ 2210                      │
   └─────────────┬─────────────┘
                 │
          ┌──────┴──────┐
          │     END     │
          └─────────────┘
```

*FIG. 22*

```
          ┌─────────────┐
          │    BEGIN     │
          └──────┬──────┘
                 │
   ┌─────────────┴─────────────┐
   │ BASE STATION              │
   │ RECEIVES USER DATA        │
   │ FROM UE                   │
   │ 2300                      │
   └─────────────┬─────────────┘
                 │
   ┌─────────────┴─────────────┐
   │ BASE STATION INITIATES    │
   │ TRANSMISSION OF USER      │
   │ DATA TO THE HOST          │
   │ COMPUTER                  │
   │ 2302                      │
   └─────────────┬─────────────┘
                 │
   ┌─────────────┴─────────────┐
   │ HOST COMPUTER             │
   │ RECEIVES THE USER         │
   │ DATA                      │
   │ 2304                      │
   └─────────────┬─────────────┘
                 │
          ┌──────┴──────┐
          │     END     │
          └─────────────┘
```

*FIG. 23*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 62865492 A

**Non-patent literature cited in the description**

- **AT&T.** Further details of PDSCH time-domain resource allocation before RRC connection setup. *3GPP draft R1-1804650*